# EUROPEAN PATENT SPECIFICATION

(11) **EP 1 982 460 B1**
(45) Date of publication and mention of the grant of the patent: **10.04.2019**
(21) Application number: 07763430.1
(22) Date of filing: 07.02.2007
(51) Int. Cl.: H04L 29/06, H04L 29/08

(54) **METHODS AND SYSTEMS FOR PROVIDING TELEPHONY SERVICES AND ENFORCING POLICIES IN A COMMUNICATION NETWORK**
VERFAHREN UND SYSTEME ZUR BEREITSTELLUNG VON TELEFONIEDIENSTEN UND ZUR ERZWINGUNG VON RICHTLINIEN IN EINEM KOMMUNIKATIONSNETZWERK
PROCEDES ET SYSTEMES POUR FOURNIR DES SERVICES DE TELEPHONIE ET APPLIQUER DES REGLES DANS UN RESEAU DE COMMUNICATION

(30) Priority: 07.02.2006 US 771513 P; 06.11.2006 US 556977; 06.02.2007 US 671861
(43) Date of publication of application: 22.10.2008
(73) Proprietor: Cisco Technology, Inc., San Jose, CA 95134 (US)
(72) Inventor: ANDREASEN, Flemming, S., Marlboro, NJ 07746 (US); ROSENBERG, Jonathan, D., Freehold, NJ 07728 (US)
(74) Representative: Hibbert, Juliet Jane Grace
(86) International application number: PCT/US2007/003403
(87) International publication number: WO 2007/092573

(56) References cited:
- WO-A1-2005/055549
- WO-A2-2004/086800
- US-A1- 2002 062 379
- US-A1- 2004 073 928
- US-A1- 2005 041 584
- US-A1- 2005 278 447
- DEVITO N M ET AL.: "Functionality and Structure of the Service Broker in Advanced Service Architectures", BELL LABS TECHNICAL JOURNAL, vol. 10, no. 1, 5 May 2005 (2005-05-05), pages 17-30, XP002665093, DOI: 10.1002/bltj.20076
- "3rd Generation Partnership Project; Technical Specification Group Services and System Aspects; IP Multimedia Subsystem (IMS); Stage 2 (Release 7)", 3GPP STANDARD; 3GPP TS 23.228, 3RD GENERATION PARTNERSHIP PROJECT, no. V7.2.0, 1 December 2005 (2005-12-01), pages 1-192, XP050363296,

## Description

### TECHNICAL FIELD OF THE DISCLOSURE

This disclosure relates in general to communication systems, and more particularly to systems and methods for providing multimedia services and enforcing policy in a communication network.

### BACKGROUND OF THE DISCLOSURE

In today's cellular architectures, it is difficult and expensive to introduce new services. The difficulty and expense may be attributed in large part to the monolithic architecture of switching centers, which do not allow for services to be introduced outside of the switch itself.

The IP Multimedia Subsystem (IMS) architecture addresses these limitations to some extent. According to current standards, an IMS architecture provides features to users through external application servers. An initial Filter Criteria (iFC) defines a set of Service Point Triggers (SPTs) to determine if a request should invoke a particular application server.

The IMS architecture, however, provides only limited capabilities through SPTs. Often, these SPTs are insufficient to provide advanced and efficient support for new terminal types and new services enabled by those terminals, such as presence, streaming' video, and the like.

Thus, to facilitate the deployment of advanced features and new services, telephony developers need a platform that is flexible and not designed solely on existing and well-known capabilities and services. In . particular, the shift from traditional cell phones to more sophisticated types of access terminals with richer user interfaces, improved processing and memory, and new types of media capabilities must be taken into account.

As communication services and products continue to grow and expand, so does the need to enforce policy within a communication network. While applications such as push-to-talk, video-telephony, and enterprise video conferencing have enhanced communications, they necessitate a broader range of policy enforcement capabilities. In particular, because such applications may operate using Session Initiation Protocol (SIP), they require unique interfaces between network devices to enforce policy. Further complicating policy enforcement is the need to provide user-specific policies since every subscriber is not the same and some will pay more for their services than others. Enforcing a user-specific policy in a modern communications environment wherein a user may roam between networks hosted by different providers also presents a predicament as the user's policy profile is typically only stored by the home service provider.

The IP Multimedia Subsystem (IMS) is a next generation networking architecture that allows service providers to provide both mobile and fixed multimedia services. Because IMS runs over the Internet protocol (IP) it allows a service provider to provide any service which the Internet can or will support. While the IMS architecture has numerous benefits, it currently only supports SIP enabled devices. Accordingly, it is not able to provide roaming policy support for many legacy devices and applications that do not use SIP. Further, the range of policy control which the system provides is limited to Quality of Service (QoS) and accounting. Given the breadth of features and the range of network resources necessary to support such features, it is desirable to enable a broader range of policy control.

A service broker is disclosed in DeVito et al. "Functionality and Structure of the Service Broker in Advanced Service Architectures", Bell Labs Technical Journal vol. 10 no.1. The disclosed service broker is a function introduced into next-generation networks to manage interactions among applications, to reuse existing applications in a combined fashion, and/or to enable existing applications with capabilities such as presence, location, and policy.

WO 2004/086800 discloses a method of providing subscription services.

The stage-2 service description for the IP Multimedia Core Network Subsystem (IMS), which includes the elements necessary to support IP Multimedia (IM) services, is disclosed in "3rd Generation Partnership Project; Technical Specification Group Services and System Aspects; IP Multimedia Subsystem (IMS); Stage 2 (Release 8), 3GPP Standard.

WO 2005/055549 discloses a session initiation protocol (SIP) server responsive to a session message to identify one of a plurality of servlets, each of the servlets providing a predefined service to a user and a servlet container. The servlet container is operable to host and to invoke the plurality of servlets.

### SUMMARY OF THE DISCLOSURE

Aspects of the invention are set out in the independent claims. Certain preferred features are set out in the dependent claims.

In accordance with the present disclosure, systems and methods for providing multimedia services and enforcing policy in a communication network are provided. In various embodiments, enhanced systems and methods for enforcing policy may substantially eliminate or reduce the disadvantages and problems associated with previous systems and methods. Additionally, in accordance with the present disclosure, the disadvantages and limitations associated with traditional IMS SPTs have been substantially reduced or eliminated. In particular, limitations associated with implementing and deploying new multimedia services have been reduced or eliminated.

One aspect of the present disclosure comprises a method for providing feature services in a multimedia communication environment. The method comprises receiving a signaling message and running one or more scripts to compare the signaling message with control data to identify one or more service enablers or application servers that are responsive to the signaling message. Each responsive service enabler then is invoked in accordance with an associated policy hook.

In accordance with another aspect of the present disclosure, a multimedia communication system is provided. The system comprises one or more service enablers, a policy hook associated with each service enabler, application servers, and a processing component. The processing component is operable to run one or more scripts to compare a signaling message with control data to identify one or more of the service enablers or application servers that are responsive to the signaling messages, and invoke each responsive service enabler or application server in accordance with the associated policy hook.

In accordance with an aspect of the present disclosure, an Application Control Point (ACP) for use in a multimedia communication system is provided. The ACP is a network element responsible for enabling and providing services to users of the system. The ACP comprises a signaling protocol interface, a programmable flow engine, a rules engine, one or more service enablers, and one or more policy hooks associated with each service enabler. The rules engine is operable to match expressions in input data. The programmable flow engine is operable to process signaling messages received through the signaling protocol interface, to interact with the rules engine to compare the signaling messages with control data, and to interact with one or more service enablers or application servers to provide multimedia communication features responsive to the signaling messages. The policy hooks are externally configurable and control the operation of the service enablers.

In accordance with yet another aspect of the present disclosure, an access terminal' for use in a multimedia communication system is provided'. The access terminal is a piece of user equipment providing services to the user. The access terminal comprises a signaling protocol interface, a programmable flow engine, a rules engine, one or more service enablers, and one or more policy hooks associated with each service enabler. The rules engine is operable to match expressions in input data. The programmable flow engine is operable to process signaling messages received through the signaling protocol interface, to interact with the rules engine to compare the signaling messages with control data, and to interact with one or more service enablers to provide multimedia communication features responsive to the signaling messages. The policy hooks are externally configurable and control the operation of the service enablers.

In accordance with a particular aspect of the present disclosure, a system for enforcing policy in a communication network includes a policy server which is operable to receive both an authorization request to allow an application invocation and a policy profile for a network user, and then decide a proper allocation of network resources based on the policy profile, the application, and available network resources. Network resources is here extended to not only include the traditional Quality of Service and associated accounting, but to also include network services such as security services, mobility services, relay services, transcoding functions, packet replication services, and deep packet inspection services. The policy server is further operable to communicate with a non-SIP application. The system also includes a network resource manager associated with the policy server and operable to monitor available network resources in the communication network. In addition, the network resource manager is functional to allocate network resources amongst a plurality of network users. The system also contains an application control point which is associated with the policy server and operable to communicate with a SIP application.

In more particular aspects, the policy server may also decide whether an application may be invoked based on the application, a policy profile, and available network resources and communicate the decision to the application control point. In another aspect, the authorization request comprises at least one token representing the application, and zero or more tokens representing altered application behavior, e.g. lowered bit-rate for a video stream. In yet another aspect, the application control point is operable to invoke a different application based on the allocation of available network resources, or to alter the application behavior based on the allocation of available network resources.

In accordance with another aspect of the present disclosure, a method for enforcing policy in a communication network includes sending a request to invoke an application from an access terminal, and sending a policy authorization request for the application invocation to a policy server in response to receiving the request to invoke. In this aspect, the authorization contains a set of tokens representing the application and its associated parameters, e.g. media streams with associated media types, codecs and bandwidth requirements. The method also includes obtaining a policy profile and information regarding available network resources from a network resource manager. The method further includes allocating available network resources based on the policy profile, the application tokens, and the available network resources. The method also includes the policy server possibly modifying the application invocation by passing a set of tokens back to the requesting application.

Important technical advantages of certain aspects of the present disclosure include enabling the implementation of additional multimedia services without hard-coding additional logic in the Application Control Point or the Access Terminal. This, in turn, may facilitate rapid development and deployment of new services without incurring excessive communication with external application servers. Other important technical advantages of certain aspects of the present disclosure include enabling application server vendors to develop new features, services, or logic independently of an application control point (ACP) vendor. Any application server vendor may define and implement a new application server, and the service provider may provide new control data to an ACP to invoke them accordingly. Moreover, the need for software upgrades to an ACP when new services or features are introduced is substantially reduced or eliminated.

Additionally, technical advantages of particular aspects of the present disclosure include enabling policy enforcement for SIP and non-SIP applications and devices in both visited and home networks. Another technical advantage is that the policy server is functional to enforce policy over a multitude of network resources, not simply QoS and accounting. A further advantage is that applications and their associated parameters may be represented by tokens which allows for applications to be added, modified and controlled without changing the software in deployed components. Also, the policy server may influence the application behavior by sending tokens to the application.

Other technical advantages of the present disclosure may be readily apparent to one skilled in the art from the following figures, descriptions, and claims. Moreover, while specific advantages have been enumerated above, various embodiments may include all, some, or none of the enumerated advantages.

### BRIEF DESCRIPTION OF THE DRAWINGS

For a more complete understanding of the present disclosure and its advantages, reference is now made to the following description, taken in conjunction with the accompanying drawings, in which:
FIGURE 1 is a simplified component diagram that illustrates a framework of one aspect of the present disclosure;
FIGURE 2 is a simplified component diagram that illustrates one aspect of an access terminal in which certain teachings of the present disclosure may be practiced;
FIGURE 3 is a flowchart of an example operation of one aspect of the present disclosure;
FIGURE 4 is a simplified block diagram that illustrates a communication system for enforcing policy in a communication network;
FIGURE 5 is a simplified block diagram that illustrates a split policy enforcement model of the communication system;
FIGURE 6 is a simplified block diagram that illustrates the operation of the communication system; and
FIGURE 7 is a simplified block diagram that illustrates policy peering in the communication system.

### DETAILED DESCRIPTION OF THE DISCLOSURE

In accordance with the present disclosure, systems and methods for providing multimedia services and enforcing policy in a communication network are provided. The present disclosure provides, among other things, a network core that provides a general framework that may accommodate new types of access terminals with new capabilities and services not yet envisioned. In a particular aspect of the disclosure, the central components of the framework do not have to be upgraded every time new capabilities and service come along. Various aspects provide a system and method for enforcing policy in a communication network that substantially eliminates or reduces the disadvantages and problems associated with previous systems and methods.

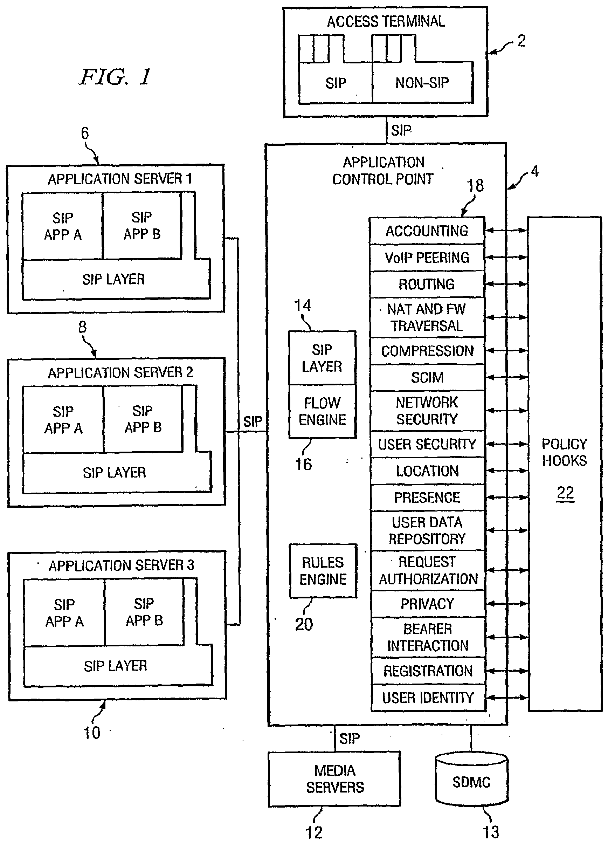

FIGURE 1 is a simplified component diagram that illustrates a framework of one aspect of the present disclosure. The framework of FIGURE 1 includes an access terminal 2, application control point (ACP) 4, application servers 6, 8, 10, and media servers 12. ACP 4 may also be coupled to a services data management center (SDMC) 13, which serves as a central subscriber data repository. Access terminal 2 and ACP 4 both are designed around several important concepts. First, a signaling protocol layer 14 with a general and programmable flow engine 16 determines how the framework processes signaling messages. In certain aspects, the signaling protocol is the Session Initiation Protocol (SIP). Certain features of the disclosure are described below with reference to this particular signaling protocol, but other well-known protocols may be substituted without departing from the scope of the disclosure. Flow engine 16 interacts with one or more service enablers 18 to perform various service-enabling functions. Second, a rules engine 20 performs matching operations between a set of input data (e.g. a SIP message) and a set of control data (e.g. a message filter criteria), and decides if a match exists or not (i.e. if the input data includes identifiable control parameters). Thirdly, policy hooks 22 are associated with service enablers 18. Policy hooks 22 may be configured and controlled externally, and in turn control the operation of service enablers 18.

Rules engine 20 performs regular expression matching operations on both messages and data. Flow engine 16 in turn supports a high-level scripting language to control its operation. As part of that operation, flow engine 16 may use rules engine 20 to perform matching operations on a message to determine how the message should be handled. For example, a user identity service enabler (described in greater detail below) may indicate whether user authentication for a particular request succeeded, and flow engine 16 may be programmed to take action accordingly (e.g. reject the request unless it was for an emergency call).

In certain aspects of the present disclosure, the matching operations supported by rules engine 20 may include: regular expression matching on SIP messages (requests and responses); regular expression matching on provisioned data and dynamic data stored in the Services Data Manager (SDMC) 13, as well as parsing of extensible markup language (XML) documents with element selection and regular expression matching on the element content; regular expression matching on tokens (application descriptors, which are textual tokens that are being associated with a signaling message in order to identify the underlying application, its constituent media components, and other attributes of potential relevance to the service logic) and data exchanged with service enablers 18; and regular expression matching on data obtained from the underlying system (e.g. time-of-day or time expired) or against document data (e.g. a calendar).

Such matching operations provide a mechanism for programming ACP 4 to operate on data and application descriptors, which allows ACP 4 to provide additional services without hard-coding additional logic. This, in turn, may facilitate rapid development and deployment of new services without incurring excessive communication with external application servers (unlike the current IMS model). Flow engine 16 also allows for matching on responses to requests, in addition to the initial request.

According to certain teachings of the present disclosure, the scripting language of flow engine 16 enables it to interact with service enablers 18 or application servers 6-10. In certain aspects, each such service enabler may be identified by a string or token, and data may be exchanged through a well-defined XML format that enables an application to examine a particular element using XPath. Each of the service enablers 18 provides a set of services to ACP 4, and may pass generic tokens and data to and from the flow engine. While scripts and control data govern the operation of ACP 4, the scripts and control data generally are fungible components. A set of scripts may be defined to control the overall operation of ACP 4, and ACP 4 may, in turn, execute them based on signaling messages and control data. The scripts are general scripts that define the overall processing of SIP messages in ACP 4. For example, all incoming SIP messages (regardless of any particular user associated with the message) may require authentication of a user identity, an accounting event, etc.

Thus, there is a significant relationship between users, access terminals, and an ACP from a SIP application layer perspective. Users send and receive requests (e.g., SIP messages) from their access terminal, through ACP 4. ACP 4, in turn, delivers services to the user by invoking service enablers responsive to the requests, and interacting with application servers, media servers, and other external resources as needed to respond to the request.

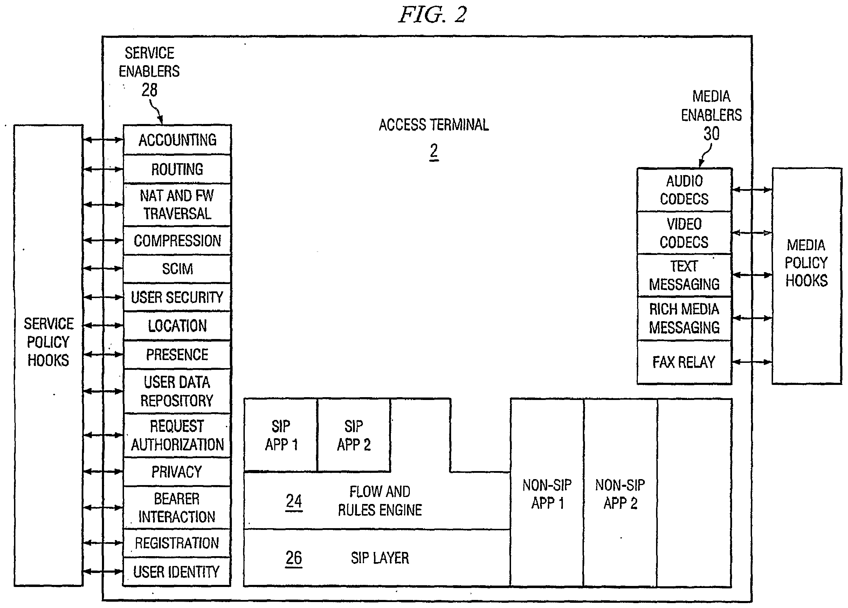

Generally, a user should be associated with an ACP so that the ACP may receive requests from the user and provide originating services to the user, and so that the ACP may receive requests destined for the user and provide terminating services for the user. In one aspect of the present disclosure, an ACP in a user's home provider network is selected dynamically if a user registers and an ACP is not already assigned. The selection may be based on any number of factors, including the user's physical proximity to an ACP. If the user registers additional access terminals, each will register with the same ACP. Thus, services in such an aspect are controlled by a single ACP. FIGURE 2 is a simplified component diagram that illustrates one aspect of an access terminal in which certain teachings of the present disclosure may be practiced. As illustrated in FIGURE 2, the application framework design of access terminal 2 is similar to that of ACP 4. Such an application framework on access terminal 4 allows for different services to be implemented on an access terminal in a generic, non-monolithic manner.

As shown in FIGURE 2, access terminal 2 may have a flow engine 24, a rules engine 26, and a set of service enablers 28 that facilitate the development and deployment of access-terminal-based SIP applications, by making the capabilities of service enablers 28 available to applications running on access terminal 2. This framework enables new SIP applications to be developed quicker and more easily on an access terminal by taking advantage of the general capabilities provided by service enablers on the access terminal. Non-SIP applications may be running on the access terminal as well. These applications may be either independent of the SIP applications, or they may invoke the services of a SIP application. For example, a game application may use SIP services to establish a voice session between the game participants.

Service enablers 18 and 28 provide general functions or capabilities that facilitate the development of a variety of applications. The set of service enablers in an ACP and an AT generally is the same, but specific functions may differ. In ACP 4, for example, service enablers 18 facilitate the deployment of network-based applications by making functions available to an application server as well as ACP 4 itself.

In certain aspects, a service enabler may be directly available to ACP 4 and application servers 6-10 (e.g., presence information), or it may represent functionality that application servers 6-10 would otherwise have to provide if not provided by ACP 4 (e.g., authenticated identity). Service enablers 18 thus represent a set of functions that may be used as building blocks to provide new services based on rules and control data.

According to certain teachings of the present disclosure, ACP 4 may support a set of basic services via flow engine 16 and service enablers 18, whereas external application servers 6-10 may provide more enhanced and sophisticated services. ACP 4 generally operates on a SIP message, interacts with service enablers 18, and as a result of that, may invoke zero, one, or more external application servers 6-10. ACP 4 generally invokes application servers 6-10 via SIP and an IMS ISC interface with enhancements to address dynamic feature interaction (described later).

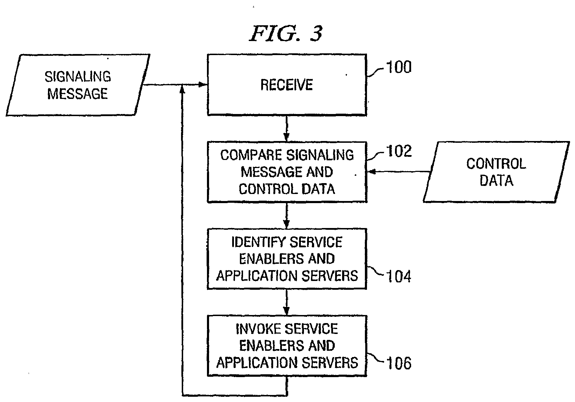

FIGURE 3 is a flowchart of an example operation of one aspect of the present disclosure. In step 100, flow engine 16 receives a signaling message or other input data. Flow engine 16 is provided with a set of scripts and matching criteria that govern the processing of the signaling message, including which service enablers and application servers to invoke. In certain aspects, a script or scripts associated with flow engine 16 compares attributes or contents of the signaling message to control data (step 102), and may invoke rules engine 20 to search for expressions within the signaling message. Control data may represent a variety of data, including the value of a signaling response messages (e.g., a "busy" response); provisioned data (e.g. service provider policy), dynamic data stored in or available to ACP 4 (e.g. registration status of a called user), data in XML format (where individual elements may be examined through XPath expressions), or data obtained from an underlying operating system (e.g. time of day) or external application (e.g. a mail filtering application)..

For example, a user may store a contact list (i.e. a "buddy list") in an XML document accessible to flow engine 16. If flow engine 16 receives a message from a sender not identified in the contact list, flow engine 16 may reject the message. Conversely, if the message is from a sender in the contact list, flow engine 16 may invoke a particular service enabler to authorize a media stream. In this example, the message represents the input data, while the contact list represents the control data. A script or scripts within flow engine 16 govern how the control data affects the message.

In another example aspect, a service provider or user may set a policy or preference for processing messages based on the time of day. In this example, flow engine 16 need not compare the contents of any messages with control data. Rather, flow engine 16 merely compares the timestamp (or other attribute) of a message with control data (represented by policy or preference data), and acts according to the timestamp. For instance, flow engine 16 may redirect all messages received after 10:00 p.m. to a media server to play a pre-recorded audio message. Here, the policy or preference represents the control data. And, again, the message represents the input data in this example. The contents of the message itself do not affect the operations of flow engine 16, though. Rather, it is an attribute (the timestamp) of the message that triggers a certain action. Alternatively, flow engine 16 may take a similar action based on the system time, without obtaining the message timestamp.

Through the scripts, flow engine 16 interacts with service enablers and determines which application servers to invoke, if any, to provide a certain feature or service (step 104).

Finally, flow engine 16 invokes each responsive service enabler or application server to provide the feature or service (106). The operation of each such service enabler is governed by an associated policy hook, which is externally configurable and may be provisioned per subscriber.

It is important to note that ACP 4 generally is not cognizant of the actual services and applications being executed (i.e., the actual service logic for a particular service may not be inherently built into ACP 4). Rather, ACP 4 is provided with a set of scripts and control data that control the processing flow and determine which application servers to invoke (and in which order). By not hard-coding specific processing flows and service logic in ACP 4, new flows and services may be introduced by providing ACP 4 with new scripts and control data, and introducing new application servers. In conjunction with this, service enablers 18 provide a powerful set of building blocks that facilitate the rapid development and introduction of new services by providing a set of core capabilities available to ACP 4 and application servers 6-10.

There are numerous advantages to this framework. For example, application server vendors are not dependent on the ACP vendor to develop new flows or logic. Any application server vendor may define and implement a new application server, and the service provider may provide new control data to ACP 4 to invoke them accordingly. As another example, the need for software upgrades to ACP 4 when new flows or services are introduced is substantially reduced or eliminated.

Another advantage of this framework is that it enables diverse and sophisticated processing flows in ACP 4. In particular, certain aspects may include a flow engine and a service capabilities interaction manager (SCIM) service enabler (described below) that operate on provisioned and dynamic data, as well as tokens passed to and from service enablers, which enables more sophisticated flows within an ACP without hard-coding the flows into the ACP. This, in turn, may enable more intelligent interaction with external application servers (e.g., by avoiding invoking an application server for a feature that is not active). User-specific rules may be provided to a SCIM service enabler as well.

A service capability interaction manager (SCIM) service enabler provides user-specific processing of SIP messages. In particular, a SCIM may operate based on a user's profile, including services subscribed to and features activated, and invoke relevant service enablers and external application servers accordingly. For example, it may use a bearer interaction service enabler (described below) to enable Quality of Service (QoS) for sessions that require it.

A SCIM also may include a scripting language similar to that of an ACP flow engine, the operation of which may be governed by signaling messages, control data, and matching operations performed by a rules engine. A SCIM may maintain and operate on dialog state in an application-agnostic manner by interpreting the scripting language and interacting with rules engine 20 to operate on signaling messages or events.

Moreover, a SCIM generally knows that there is a dialog and has access to various state information associated with a dialog, such as dialog ID, dialog state, dialog duration, and the like. Thus, a SCIM may perform dialog stateful feature processing. For instance, maintaining dialog state may allow a SCIM to limit a particular user or access terminal to only two simultaneous calls. Dialog state may be maintained in an application agnostic manner. A SCIM also may associate tokens with a dialog that identifies a dialog type (e.g., push-to-talk or "ptt"), features invoked (e.g., "CFNA"), bearer interactions ("audio," "video," etc.) and any other type of information that may be of importance to subsequent processing. According to certain teachings of the present disclosure, these tokens may be simple "strings" on which a SCIM may perform general matching operations. A SCIM may determine which token to associate via expression matching operations (e.g. regular expressions) on input data, such as a media line in a signaling message. Using string tokens avoids hard-coding of features and other capabilities in a SCIM, while at the same time enabling a SCIM to be programmed with feature interaction and feature invocation aware logic based on these tokens.

A SCIM also may operate on static and dynamic user data (e.g., a buddy list or presence data). In aspects having a scripting language, a SCIM may process decisions to be made based' on the contents of such data. In particular, a scripting language (and a rules engine) may support the use of XPath, which allows for one or more data elements in an XML document to be retrieved based on position in document, type, content, etc. XPath may be used, for example, to determine if a calling party is in a user's buddy list, and if so let the call proceed, or if not, divert it to voice-mail.

A SCIM generally follows the principle of avoiding hard-coded application logic in an ACP. According to teachings of the present disclosure, a SCIM may avoid hard-coded logic through its generic scripting language, which controls the operation of a SCIM. In certain aspects of the present disclosure, scripts may be included in a user's profile. Scripts in user profiles generally should not include excessive application logic, but rather control the overall operation of user features, and interaction between those features. Consequently, scripts should invoke application servers, which provide the enhanced feature logic.

Moreover, in certain aspects of the present disclosure, a SCIM has the capability to examine a user's profile data to understand the activation status of various features. Understanding a feature's activation status may allow a SCIM to avoid unnecessarily invoking application servers. For instance, if a feature requires invocation of an external application server, a SCIM may invoke the application server only if a user activated that particular feature (e.g., Call Forward No Answer). This provides for a considerably more efficient system (less delay and overall processing) than provided by the IMS Initial Filter Criteria, which can only perform matching operations on SIP messages.

Since a SCIM is a service enabler that generally invokes user-specific features, one function of a SCIM is to resolve feature interaction between such features. Static feature interactions, for instance, may be resolved by evaluating a user's filter criteria in a defined order, while dynamic feature interactions may be resolved through extended signaling capabilities such as media feature tags and feature override indicators. A feature override indicator may be, for example, a token added by an application server that causes a SCIM to operate differently than it otherwise would have. A SCIM also may use its knowledge of dialog state to resolve feature interactions, and in some cases even override an operation taking place on an endpoint. For example, in case of an emergency, a SCIM may tear-down or suspend calls on an access terminal and then present the emergency information (e.g., adverse weather information) to a user.

ACP 4 also may include a number of additional service enablers, including service enablers for user identity, registration, bearer interaction, privacy, request authorization, user data repository, presence, location, user security, SIP infrastructure security, SIP compression, NAT and firewall traversal, request routing, VoIP peering, and accounting. In general, a policy hook is associated with each such service enabler. These example service enablers are merely illustrative and not exclusive, and each is described in greater detail below.

A user identity service enabler provides user authentication and associated user identity assertion functions, which generally happens as part of the originating service processing. Each user has a private user identity, which is used to identify the particular user. Associated with a private user identity are one or more public user identities, which serve two purposes. First, a public user identity is an identity the user is allowed to assert, and which will be used to identify the user throughout the rest of the system. Second, the public user identity is a name that can be used to reference the user and to which future sessions or requests can be directed. The user is allowed to suggest a public user identity to assert, but if none are suggested, one of them may be asserted for him. Once a user's private identity has been authenticated, and a valid public identity has been provided, the ACP provides the asserted identity in further signaling messages going to other entities in the system (e.g., application servers such a voice-mail). This alleviates those other entities from having to authenticate the user. The ACP effectively performs a "single sign-on" operation for a user in an application domain. The actual user authentication process may be performed using HTTP digest, where the ACP interacts with a Security Center for the credentials.

An asserted user identity may be provided in two different ways. The first simply places the asserted identity in a header and relies on transitive trust among all elements in the system. The other (more secure) method requires the ACP to digitally sign the identity asserted by the user (assuming successful authentication), thereby avoiding the inherent weaknesses of the transitive trust model.

Asserting a particular identity for a user works well from an authentication point of view, but it has some inherent practical limitations when it comes to using those identities for authorization purposes. For example, users, may want to limit who has access to their presence status, and calls from certain types of users (e.g., operators) or applications (network-based services) should be allowed to bypass normal processing rules and user preferences. All of this involves an authorization decision.

The user identity service enabler also supports the concept of trait-based authorization. With trait-based authorization, users have one or more traits or attributes associated with them. A trait can, for example, be "operator," or "over-21." When a user has been authenticated, the network asserts the traits associated with that user, and the traits asserted then may be used for subsequent authorization decisions. For example, if an "operator" calls the user, normal terminating feature processing may be overridden, or a user that is not "over-21" may not be permitted to access certain services or content, etc. The user identity service enabler supports assertion of these traits as well.

The user identity service enabler also may play a role during terminating service processing. When the ACP receives a request targeted to one of its users, the user identity service enabler may ensure that any identity information provided in the message is authentic. In the transitive identity trust model, this implies a need to remove any identity information provided by a previous hop that is un-trusted. When identities instead are signed digitally, the signature is verified. If the signature is invalid, further disposition of the request is up to the provider and user's policy. The identity may not be used for any subsequent authorization decisions, but instead must be treated as unavailable.

The policy hooks associated with a user' identity service enabler may include the public user identities a particular private user identity can assert, an indication of which public user identity is the default public user identity, a preferred method of indicating the user identity (transitive trust, digitally signed, or both), the traits associated with a particular user (which may be used for trait-based authorization), and disposition of requests without a valid identity. In one aspect, the user-specific policy hooks may be stored as part of the user's profile.

A registration service enabler provides functions that facilitate registering an access terminal with a network. When a user starts SIP service on an access terminal, the user needs to register the access terminal with the network. Specifically, the user registers a binding between one or more public user identities and the access terminal. The registration service enabler is involved in this process. A private user identity may be associated with one or more public identities, and it is one of these public identities that may be registered. As a side-effect of registering a public identity, one or more associated public identities may be registered automatically as well. This is known as an "implicit registration set." The registration service enabler may perform this implicit registration automatically.

The registration service enabler also may be responsible for maintaining and managing the registration bindings. Registrations generally have a finite lifetime associated with them and when they expire, the registration service enabler generates an event internal to the ACP. The ACP, in turn, may take action on this event.

Similarly, registrations' can be removed forcefully. The registration service enabler may have an external interface through which management related registration requests may be exchanged (e.g., deregistration, or forced re-registration). In particular, the registration service enabler may be asked to forcefully deregister all access terminals for a particular user, in which case the registration service enabler removes the particular user's registration bindings and generates an event internal to the ACP. The ACP, again, can take action on this event (i.e., to force tear-down of any sessions that user has).

Access terminals include a variety of devices and systems, such as cell-phones, PDAs, laptops, etc., and hence have different capabilities and applications. When a user registers an access terminal, the user agent capabilities of the access terminal may be conveyed to the network in the form of "feature tags." As new applications and features are added to the access terminal, and old ones are potentially removed, the set of feature tags supported by the access terminal changes. Examples of feature tags include: supported media types (e.g., audio, video, text); supported SIP methods and event packages; and specific supported applications (e.g., push-to-talk).

The potential set of feature tags conveyed may be quite large, and new ones will likely continue to be created. It is therefore advantageous that features are not hard-coded into the ACP. In accordance with certain teachings of the present disclosure, the registration service enabler provides such an advantage by treating the feature tags as opaque strings of feature tag data, upon which the ACP can operate.

When users register and indicate a certain set of feature tags, they are indicating that they are capable of receiving requests for certain classes of media, applications, etc. Users, however, may not be authorized to use all media types and applications, but rather a limited set of features to which they subscribe. Those feature authorization policies may be enforced when the feature tags are registered, or when services are invoked (only authorized services would be allowed). According to certain teachings of the present disclosure, the registration service enabler may support this enforcement by associating only the feature tags authorized for the registered user with the device. The set of authorized feature tags for a user is provisioned as part of the user profile and may be updated.

Registration events also may be of interest to external entities. Consequently, the registration service enabler may notify other SIP entities of registration events.

Finally, the registration service enabler may interact with an SDMC to identify an ACP that is currently assigned to a user. This, in turn, enables incoming requests for that user to be routed correctly.

Policy hooks associated with the registration service enabler may include implicit registration set associated with a user, authorized capabilities associated with a user, external stimulus, network initiated registration actions (e.g., deregistration or re-registration), and updates to authorized capabilities associated with a user.

A bearer interaction service enabler facilitates policy and resource interactions with a bearer layer to obtain network resources for media streams. A bearer interaction service enabler may derive the following information and provide it to a policy server: user identity; desired accounting policies (e.g., online or offline) and parameters (e.g., destination for accounting parameters, correlators); application name; types of media streams (audio, video, etc.); packet classifiers (IP-address, port, transport protocol); and bandwidth requirements.

A user identity is an identity of a responsible user, which may be obtained from a user identity service enabler.

Accounting information may include the type of accounting (e.g., online or offline), as well as the address of an accounting server.

When bearer interaction is needed to satisfy a given request, a bearer is requested in the context of a particular application. Applications have names associated with them, such as "PTT" for Push-To-Talk, or "VTel" for a video telephony call. Such names are generic strings ("tokens") assigned by a service provider and provided to a policy server function when a policy request is made. In order to determine the application name for a particular request, a bearer interaction service enabler uses a high-level scripting language and the general capabilities of a rules engine to perform application classification by performing regular expression matching on requests against a configurable set of control data used for application classification. Application names and associated semantics generally are not hard-coded in an ACP. Rather, an ACP may have a generic and programmable way of determining them based on regular expression matching of a rules engine.

Media stream types may be determined in a similar way. For instance, an SDP is inspected for media stream types indicated in the SDP. However, a programmable media stream classification function using a high-level scripting language and a rules engine may be used as well.

Similar logic may apply to determining packet classifiers, which typically operate on well-known SDP parameters. Packet classifiers may also be configured to look for additional parameters as well, some of which may be new.

Finally, bandwidth requirements for a media stream should be determined. Bandwidth requirements depend on the codec(s) used, and an SDP is inspected by a bandwidth determination function, which also may be configurable and may use a high-level scripting language and a rules engine to enable new codecs without incurring the need to upgrade an ACP.

According to certain teaching of the present disclosure, a bearer interaction service enabler feeds these parameters into a policy server. A bearer interaction service enabler may also make them available to other service logic as well (e.g., they can be used as parameters by the SCIM).

The bearer interaction service enabler interacts with a policy server through generic tokens. Tokens from the policy server may be either received in response to a request (e.g., a policy request), or they may be generated autonomously by the policy server in response to an external event (e.g., terminal roamed from EVDO to 1xRTT, terminal not reachable, idle terminal). An ACP, in turn, may be programmed to take action on these received tokens. For example, if a SCIM invoked the bearer interaction service enabler' and it receives a "bearer.authorized" response, it may proceed with processing the request. If, however, it receives a "bearer.unauthorized" response, it may instead invoke an announcement server.

Accordingly, policy hooks provided for the bearer interaction may include control data and associated application identifiers for application classification, control data and associated media stream identifiers for media stream classification, control data and associated packet classifier identifiers for the packet classification, control data and associated bandwidth determination for bandwidth determination, and data for accounting and an accounting server.

A request authorization service enabler may be responsible for authorizing originating and terminating requests. In this context, "originating requests" generally are requests placed by a user and received by an ACP (e.g., a call made by the user), and "terminating requests" generally are requests targeted to a user that arrive at an ACP (e.g., a call to the user). When a request arrives at an ACP, it should compare the request with one or more authorization policies to determine if the request may proceed.

There are multiple aspects to consider for request authorization policies, including the scope of an authorization policy (e.g., operator-wide or user-specific), authorization to use particular SIP services, applications, and media servers, authorization to send requests to certain destinations (e.g., make a long distance call, or send an instant message to a user of another provider), and authorization for a remote user or entity to subscribe to a local user's presence, location, or call information. Such policies are merely examples of possible authorization policies, and the potential list of potential policies and the input parameters used to determine if a particular authorization is satisfied or not may be limitless.

Moreover, a particular class of authorization polices associated with bearer services generally is covered by a bearer interaction service enabler, while a policy server actually provides specific authorization.

A user data repository service enabler provides access to several types of user data, including user profile data, static repository data, and dynamic repository data.

User profile data may be provisioned and stored in the SDMC and may be retrieved by the ACP when a user first registers. If changes are made to user profile data, a user data repository service enabler may notify an ACP of those changes. User profile data may include information about a user and various authorization policies associated with him, such as user identity information (e.g., private/public identities and traits), registration-related information (e.g., implicit registration sets and authorized terminal capabilities), request authorization information (e.g., services subscribed to), and user specific filter criteria to control and invoke services for the user.

Static repository data generally includes data that needs to be retained for some duration. An ACP may obtain and cache such data from the SDMC as needed, and may make it available to itself and authorized application servers. If an ACP or an application makes any changes to such data, the ACP may update a master copy of the data in the SDMC. Static repository data may be provided and managed either by an ACP or by one or more application servers. If the data is useful to multiple applications or used by a service enabler, it may be managed by an ACP. This type of data is referred to herein generally as "structured data." A "buddy list" is an example of structured data. Structured data may have a name (e.g., "buddylist") and a well-defined structure associated with it (e.g., an XML schema). Such attributes allow service enablers and applications to reference (obtain a copy) and operate on structured data in a coherent manner. In contrast, static repository data that may be useful only to a particular application is referred to generally as "transparent repository data." Structure associated with transparent repository data may be known only to a specific application server. Transparent repository data also may have a name associated with it (e.g., "app1.data1").

Both structured and transparent user data repository data may be obtained, cached, and updated by an ACP via interactions with the SDMC. If data is accessed by an application server, an ACP may serve as a "funnel" for the SDMC access on behalf of the application server. Alternatively, a service provider's application servers may access the SDMC directly.

Finally, data that may not need to be retained is referred to generally as "dynamic repository data." Dynamic repository data may be available on an ACP only; the SDMC may never have access to dynamic repository data. Dynamic repository data allows an ACP to store dynamic data internally. In certain aspects, dynamic repository data may be directly accessed only by an ACP. In such an aspect, an external entity may rely on standard SIP mechanisms to access the' data.' For example, presence data may be obtained via SUBSCRIBE, and registration data via a REGISTER query or registration-event.

Policy hooks associated with a user data repository service enabler control which application servers have access to what user data repository data, as well as the level of access (e.g., read, write, add element, delete element, etc.).

A privacy service enabler provides functions associated with several forms of privacy, including identity privacy and IP address privacy.

Identity privacy ensures that user identity information is not provided to an un-trusted entity. For example, if user identity is provided in a separate header without any integrity protection (transitive trust model), then the header may be removed prior to forwarding the request to an untrusted entity. Alternatively, if user identity is provided by an ACP digitally signing the identity asserted by an access terminal, the originating ACP must ensure that the identity asserted is unintelligible to all un-trusted entities. This may be achieved by encrypting the user identity with a key that is well-known only to entities within the trust boundary.

IP address privacy is the privacy of an access terminal's signaling address and its media stream address (es). An access terminal's signaling address and media stream address (es) may not be revealed to un-trusted entities (such as another access terminal). This in turn implies that both signaling and media may need to be relayed through an intermediary. Again, in the transitive trust model this may be achieved by sending the request through a SIP Back-to-Back user agent with an associated media relay. If user identity is digitally signed, however, an ACP must ensure that the intermediary is inserted before the request and accompanying (private) user identity is digitally signed. Alternatively, the access terminal may take part in the IP-address privacy service by invoking a media relay and obtaining anonymous GRUUs (which identify only the assigned ACP to other parties, not the actual user) from an ACP. An ACP privacy enabler in turn may provide the anonymous GRUU function.

A presence service enabler supports the collection, composition, and delivery of presence information by acting as the focal point for connecting sources of presence information (e.g. user endpoints), and interested parties, referred to herein as "watchers." An addressable entity for presence is referred to herein as a "presentity." In some systems, a presentity is a user, which is addressed by a public user identity or address-of-record (AOR). A presence service enabler manages presence data for presentities (users) associated with an ACP.

A presence service enabler may obtain presence information in a variety of ways. For instance, sources of presence information may push information to a presence server using the SIP PUBLISH method. The PUBLISH request may be addressed to the presentity, which may result in the request being routed to an ACP associated with that presentity in accordance with normal routing rules. Presence information for a user may be published by some or all of the access terminals registered for that user, but other sources of publication are also possible. For example, when a user registers, a presence service enabler may be informed of the registration. The presence service enabler may then update the user's presence information accordingly.

A presence service enabler may also act as a watcher, using the SIP SUBSCRIBE method to subscribe to presence information available elsewhere. This is a useful technique for extracting presence information from foreign presence systems. The presence service may also obtain information from other types of systems, such as calendars, location servers, etc., and combine the information to infer presence states or provide richer and more accurate presence information.

Presence information may include information about the capabilities of a user's endpoint (e.g., support for audio, video). This information may be provided by a user as part of publishing presence information, or it may be derived from the registration procedure. Information about the capabilities of a user's access network and policies associated with that network also may be valuable. If a user is currently on a 1xRTT network that will not allow the user to participate in video calls, for instance, the user's capabilities may be updated accordingly. Use of such information may enable new services, such as calling a user only when available both on a device and a network that supports video (not just audio), indicating availability for Instant Messaging when available on an endpoint that supports IM, etc. Gathering information from different sources as well as different layers (network and application), and composing the information into a coherent view of the user's presence state (including device and network capabilities), enables new types of services.

Presence subscriptions by watchers generally are addressed to a public user identity (AOR) of a presentity, and delivered to an ACP serving the associated user. An ACP manages the dialog for each subscription, and may send a NOTIFY message to the watcher(s) when there is a relevant change in the presence status of the presentity.

Presence information may be sensitive and access to it should be controlled at several levels. For instance, a first level of control may be the subscription level (i.e. whether to accept the presence subscription). A request authorization service enabler may implement this level of authorization. A second level of control may be the information level. Presence information provided to a watcher may be controlled by combining information from multiple sources, possibly adding additional status inferred from the combined information, and then filtering out information that should not be presented to a watcher. The filtering process may be performed based on watcher authorization rules associated with a presentity.

The presence server also may accept subscriptions for information about watchers. Presence clients may use this information to learn when users attempt to subscribe to presence for the first time. With this information, a presence client may alter authorization rules to specify how much presence status should be provided to a particular watcher, if any. Another example involves a presence subscription authorization application server, where an application server subscribes to watcher information. When a previously unauthorized first user tries to subscribe to a second user's presence, the application server learns about this, and may inform the second user of the attempted subscription. The application server may then ask the second user to authorize the subscription, possibly at different information levels, depending on the level of presence detail the second user wants to reveal to the first user (e.g., low, medium, or high). Note that such an application server may provide additional functionality as well. For example, an application server may ensure that only authenticated users can subscribe to presence, and check such requests against certain types of lists (e.g. a "blacklist" of users prohibited from subscribing).

A substantial amount of policy information may be required for the proper operation of the presence service enabler on behalf of a specific presentity. Such policy information may include identities of users permitted to publish presence status, proper combination of status from multiple sources to obtain an overall status of a presentity, identities of users permitted to subscribe to presence status, the scope of presence status for a presentity that may be disclosed to a particular watcher, and identifies of user permitted to manage policy information.

Policy information may be stored for each user in the SDMC and cached by an ACP upon initial invocation of the presence service enabler for that user. Some policy information may be managed by a user, while other policy information may be managed by a service provider. For example, a service provider may allow certain applications or user having certain traits to subscribe to a user's presence status, irrespective of the watcher authorization provided by the user. The policy information managed by a user generally is managed through a presence client. In turn, a presence client interacts with a presence service enabler to manage and update information in the SDMC.

A presence service enabler provides several expansion mechanisms to accommodate new types of presence information. In certain aspects, for example, a presence service enabler may be able to support new XML schemas, so that new types of presence data may be defined in the form of XML documents. The presence service enabler also may support a programmable scripting language that controls how presence information is compose in order to derive a consolidated view of a user's presence status based on aggregate presence data. And according to certain teachings of the present disclosure, a presence service enabler may take input from a variety of sources and operate on it in a generic manner. For instance, a presence service enabler may be programmed to operate on a variety of XML schemas. Services that either are driven by presence or take advantage of presence data may be implemented outside the presence service enabler, and in particular in application servers that use presence information to implement services.

A location service enabler supports the collection and distribution of location information associated with users by acting as the focal point for connecting sources of location information, known as Location Generators, and interested parties, known as Location Recipients. An example Location Generator could be a Position Server, and examples of Location Recipients could be individual SIP users and application servers.

A location service enabler provides functions for identifying the physical location of a user. Location information may be required by law or regulation to support emergency service, where the physical location of the user determines the routing of the emergency call. Access to location information, however, also may enable many new types of services. Examples of such services include weather forecast, alerts about current traffic conditions, location-sensitive information services such as finding a restaurant, calling a taxi, etc.

An ACP generally does not determine a user's location, though. Rather, an ACP often relies on one or more "location generators" to tell it about the location of a particular user. A position server is an example of a location generator that can determine the geographical location of a particular access terminal when using 1xRTT or EVDO. Alternatively, an access terminal may be able to inform an ACP of its current location if it contains a GPS receiver. An ACP, in turn, may associate users with access terminals (through registration), and hence may determine the location of a user this way. Determining the location of an access terminal, however, may not be sufficient (e.g. an access terminal is just a router). In that case, a SIP endpoint itself may provide more accurate location information to an ACP.

Access terminals may be using other types of access networks, as well (e.g., WiFi). In such cases, a SIP endpoint may provide its location information to an ACP, or an ACP may interact with an access network to determine the physical location of the SIP endpoint.

Location information may be provided in different forms. For example, location information may include a civic location (such as postal address) or geographic location (such as GPS coordinates). Any form of location information, however, may be provided in the form of an XML document. In one aspect of the present disclosure, a location service enabler allows for new XML schemas to be defined. Note that this may enable location information to be used as input to a presence service enabler as well.

A location service enabler generally shares certain attributes with a presence service enabler. For instance, a location service enabler and a presence service enabler may share policy authorization issues such as a need to control and authorize who can provide location(/presence) information for a user, and a need to control and authorize who can access location(/presence) information for a user. Consequently, the strategy for dealing with these issues may be similar for location and presence information. Accordingly, certain aspects of the present disclosure may include a set of common policy rules that govern both.

In accordance with certain teachings of the present disclosure, a location service enabler may not contain any specific service logic. Rather, in some aspects, a location service enabler may support a programmable scripting language that governs its operation on location information (e.g., to check for authorization of a particular request). Services that either are driven by location information or take advantage of location information may be implemented externally to a location service enabler. In particular, these services may be implemented in application servers that use the location information.

A user security service enabler provides security functions that benefit a user by addressing specific security threats. Signaling integrity and confidentiality, and anti-spam (anti-Spit, anti-IM Spam, etc.) are illustrative of security threats that may be addressed by a user security service enabler. Signaling integrity and confidentiality generally comprise securing the signaling by providing integrity protection and encryption between a SIP client and an ACP. TLS encryption of SIP signaling, which provides integrity protection, mutual authentication (if desired), and encryption, may provide signaling integrity and confidentiality. This generally is performed at the application layer to allow devices that may be transiting unprotected networks, such as 802.11 networks, which are then connected to EVDO networks. It may also provide another layer of security even for those devices that are directly connected to an EVDO network. Certain compression schemes also work well in conjunction with TLS.

"Spam" refers to acts of unsolicited sending of a message in bulk. Spam has become widespread in email systems, and is likely to affect other IP-based communications in the future. Given the ever-changing nature of spam, it is important not to hardcode spam detection logic inside a user security service enabler. Accordingly, certain aspects of the present disclosure may implement generic spam detection, while other aspects may have it provided by an external server that can be updated easily. Example techniques for dealing with spam include content filtering, blacklists, whitelists, consent, reputation systems, limited use addresses, turing tests, computational puzzles, payments at risk, legal action, circles of trust, and central providers.

Additional user security threats may be identified, and new user security threats are likely to appear in the future. To address such new security threats, a user security service enabler may invoke an external server, or a user security server may be extended itself.

A SIP infrastructure security service enabler provides security functions to benefit a network by addressing specific security threats to it. Fraud, and signaling integrity and confidentiality are illustrative of such security threats to a network.

Network security threats may be similar to user security threats, but the target of the threat is network resources such as network bandwidth, network elements (SIP proxies, media servers), and network infrastructure (routers, switches, firewalls).

"Fraud" refers to the unauthorized use of resources, including both SIP resources and network resources. Fraud may be prevented primarily through granting QoS to authorized services, which leaves unauthorized services with only best effort quality over the air and over a wireline network.

Because SIP signaling may traverse unprotected networks, SIP signaling should be encrypted and authenticated. Furthermore, entities that wish to exchange SIP signaling with an ACP should first authenticate successfully, and then be authorized to do so.

A NAT and firewall traversal service enabler provides a keep-alive mechanism between SIP endpoints and an ACP that minimizes processing overhead for messages traversing NATs and firewalls. Furthermore, to assist traversal of some restrictive types of NATs and firewalls, a NAT and firewall traversal service enabler may ensure that traffic is sent from the same source address from which it is received. A NAT and firewall traversal service enabler also may inform a policy server that NAT and firewall traversal should be allowed for appropriate media.

For instance, a SIP endpoint may be behind Network Address Translators (NATs) and firewalls if the SIP endpoint application resides on a laptop and connectivity is provided through another entity (e.g., a router) with an EVDO access card. Similarly, entities using another type of access network (e.g., WiFi) may reside behind a NAT or firewall as well. NATs and firewalls typically create bindings and pinholes inside themselves and generally prevent packets sent by a first entity from being sent to a second entity behind the NAT or firewall unless the second entity initiated contact with the first entity. When the second entity sends a packet to the first entity, a binding or pinhole is created inside the NAT or firewall, which in turn enables packets to be sent in the reverse direction. The lifetime of this binding, though, may be limited. Some NATs, for example, may destroy bindings after as few as thirty seconds of inactivity. Packets subsequently sent from the first entity to the second entity likely would not be delivered. If the first entity is an ACP and the second entity a SIP endpoint behind an access terminal, the SIP endpoint may not receive incoming calls or other requests.

Accordingly, SIP endpoints should send traffic to an ACP at regular intervals to maintain bindings behind any associated NATs or firewalls. Since such messages may be sent with substantial frequency, overhead for processing these messages should be minimized. Also, a NAT binding change (e.g. because the NAT rebooted) should be detectable.

A compression service enabler facilitates a more efficient use of the airlink bandwidth, as well as minimizes airlink propagation delay, by compressing SIP signaling between an access terminal and an ACP. This compression leads to smaller messages, which use less bandwidth and can be transmitted faster.

In certain aspects of the present disclosure, a compression service enabler may implement a compression method generally known as "SigComp." SigComp generally allows for the use of one or more compression algorithms. The compression algorithms used may differ among applications, and a compression algorithm may even be optimized for a particular application.

Accordingly, a compression service enabler may implement different compression algorithms in various aspects. Moreover, a static dictionary may be loaded to improve initial compression phases. In such an aspect, a service provider may optimize compression for particular applications that may be deployed and supported by the service provider, thereby making them both faster (less transmission propagation delay) and more airlink efficient (less data).

Policy hooks associated with a compression service enabler may include the compression algorithms and static dictionaries.

A request routing service enabler may provide SIP-layer routing of SIP messages within a network. A request routing service enabler supports routing to many types of entities, including SIP users, SIP servers, VoIP peer networks, an the public switched telephone network.

A user generally is assigned to an ACP when they register an access terminal, and if a' user registers multiple access terminals, each should be assigned to the same ACP in order to provide coherent feature handling. The binding between a public user identity (telephone number or SIP(S)-URI) and its associated ACP is stored in the SDMC, so routing of requests to registered SIP users typically involves a lookup in the SDMC. If an' entry is found, then routing to the ACP continues.

Only an ACP has this capability, however. So if a request from the PSTN or VoIP peer network is received, they are sent to a default ACP. The default ACP, in turn, performs this routing lookup and forwards the message accordingly.

SIP users may not have an ACP assigned, e.g. when they have not registered any devices. Still, requests for them may be received, e.g. an incoming call or a presence subscription. In that case, the SDMC lookup may not yield any result. An ACP may be assigned to a targeted user then, with an indication that the ACP is assigned for an unregistered user. The request to the unregistered user may then be routed to the assigned ACP.

SIP servers generally have names associated with them. By default, a SIP server has a domain name and requests addressed to a SIP server follow standard DNS resolution procedures. Specific routing tables, though, may include a SIP server name that points to a specific next-hop (IP-address or domain-name). Such server name routes may be either global or ACP-specific. Generally, such specific routes are stored in the SDMC and cached by the relevant ACPs.

A request also may be routed to a peer network. Requests without telephone numbers generally are routed according to a domain-name of a SIP(S)-URI. By default, standard DNS resolution procedures should be followed to determine the next hop (entry point to peer domain). But again, specific routing tables may specify a SIP domain name points to one or more indicated next-hops (IP-address or peer server domain-name). Each of those next-hops may be used, and the determination of which to use may be based on an associated routing policy. Such routing policy may use time-of-day, load-balancing, etc. Domain routing tables and associated policies may be either global or ACP-specific. Generally, they are stored in the SDMC and cached by the relevant ACPs.

When a request is addressed to a telephone number not served by a service provider, the request may be sent to either the PSTN or a VoIP peer network. A telephony number may be routed based upon ENUM or specific service provider route tables.

ENUM maps a specific telephone number to another URI. If a URI is a SIP(S)-URI with a domain-name to which a service provider wants to route a request, the domain-name based routing procedure may be invoked. Different "types" of ENUM may be used, such as public ENUM, or carrier ENUM where several providers agree to use part of the DNS tree for ENUM-like functionality.

If there is no ENUM entry (or ENUM is not being used), specific telephone number route tables may be used for routing a request. These routing tables typically are based on prefixes, and may map to one or more next-hops. The next-hop(s) may be either a PSTN gateway or a VoIP peer provider (e.g., another provider that provides PSTN termination services). In either case, route policies may be associated with route entries to guide the selection of next-hops. Telephone number routing tables and associated policies may be either global or ACP-specific. They may be stored in the SDMC and cached by the relevant ACPs.

Accordingly, policy hooks for a routing service enabler may include routing tables, which further may include mapping of users (telephone number and SIP(S)-URIs) to an ACP stored in the SDMC, global or ACP-specific server name routes (server name mapping to next hop with associated route policies), global or ACP-specific domain name routes (domain name mapping to next hop with associated route policies), telephone-number routes (prefix mapping to next hop with associated route policies), and Public and or Carrier ENUM.

A VoIP peering service enabler provides functions associated with requests exchanged between SIP networks operated by distinct service providers. VoIP peering is typically done via a Session Border Controller, which is a logical collection of signaling and possibly media functions involved in exchanging signaling and media with a peer network.

An accounting service enabler provides general accounting support in an ACP in an accounting framework that defines trigger points for charging events. An accounting service enabler in an ACP may support different types of triggers, including triggers for services provided by an ACP itself, and triggers for services provided by application servers.

Triggers for services provided by an ACP itself include things such as basic voice calls, presence subscriptions, and routing of requests to other entities (e.g., a PSTN gateway, or any other capability that is native to an ACP). Accordingly, much accounting data may be generated by an ACP alone. In alternative or additional aspects of the present disclosure, though, an accounting service enabler also may include triggers for charging events on all incoming calls and requests from the PSTN or VoIP peers. Producing charging events for outgoing calls and requests may aid in monitoring and troubleshooting as well. Accounting data may be generated based on functions supported by an ACP service enablers, and hence both triggers and charging data may be relatively static. Nonetheless, triggers and charging data generally are not hard-coded in an ACP.

In certain aspects of the present disclosure, an accounting service enabler also may include triggers and accounting data for application servers. If an application server is invoked, an accounting service enabler may generate an associated charging event. The contents of this charging event are configurable as well.

The fact that a particular application server is invoked may be sufficient charging information for many application services. Some application servers, though, may need application-specific accounting. Accordingly, such an application server may use an accounting service enabler to generate its charging events.

As FIGURES 1 and 2 illustrate, certain aspects of the present disclosure also include the concept of a "media enabler." A media enabler is a function or capability that facilitates the exchange of media streams between entities in real-time. FIGURE 2 illustrates media enablers 30 within access terminal 2, but media enablers also may exist in the network. Media enablers 30 in access terminal 2 may include audio codecs, video codecs, text messaging, rich media messaging, and fax relay, as illustrated in FIGURE 2. Media enablers in the network may include media servers (as shown in FIGURE 1) and NAT relays.

The set of media enablers supported by the access terminal and the network generally determines the set of communications services that can be supported. Similar to service enablers, media enablers have a policy hook associated with them, which may control the overall operation of the media enabler (e.g., allowed usage). A media enabler may or may not be authorized to be used, and the way a particular media enabler can be used (e.g., choice of audio codec) may be restricted as well.

The principles of the present disclosure are applicable to a variety of computer hardware and software configurations. The term "computer hardware" or "hardware," as used herein, refers to any machine or apparatus that is capable of accepting, performing logic operations on, storing, or displaying data, and includes without limitation processors and memory; the term "computer software" or "software," refers to any set of instructions operable to cause computer hardware to perform an operation. A "computer," as that term is used herein, includes without limitation any useful combination of hardware and software, and a "computer program" or "program" includes without limitation any software operable to cause computer hardware to accept, perform logic operations on, store, or display data. A computer program may, and often is, comprised of a plurality of smaller programming units, including without limitation subroutines, modules, functions, methods, and procedures. Thus, the functions of the present disclosure may be distributed among a plurality of computers and computer programs.

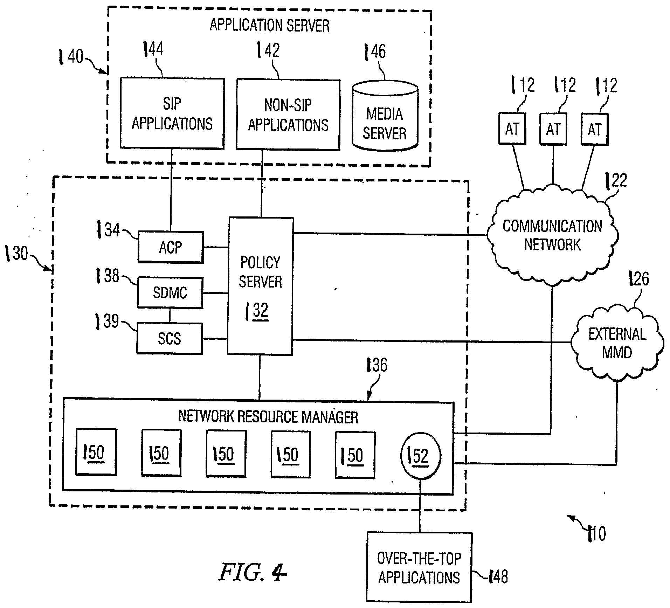

FIGURES 4 through 7 illustrate a system and method for enforcing policy in a communication network according to one aspect of the present disclosure.

FIGURE 4 illustrates a communication system 110 for communicating, receiving, and/or transmitting data in accordance with an embodiment of the present disclosure. Communication system 110 includes a plurality of access terminals 112, communication network 122, and external multimedia domain (MMD) 126. Communication system 110 further includes policy center 130 which comprises policy server 132, application control point 134, network resource manager 136, Services Data Management Center (SDMC) 138, and Security Center Server (SCS) 139. Also included in communication system 110 is application server 140 which may include Session Initiation Protocol (SIP) applications 142 and non-SIP applications 144.

In accordance with the teachings of the present disclosure, policy center 130 is functional to apply subscriber specific system policies across communication system 110. In another aspect of the present disclosure, policy center 130 is further capable of applying generic network policy throughout communication system 110. Further, policy center 130 may also apply such policies to both SIP and non-SIP based applications as well as roaming and non-roaming subscribers.

As illustrated in FIGURE 4, communication network 122 represents a series of points or nodes of interconnected communication paths for receiving and transmitting information or data throughout communication system 110. While illustrated as a single network, communication network 122 is intended to represent any number, type, size, or group of communication networks. More particularly, communication network 122 represents any network, or group of networks, capable of transmitting audio, and/or video telecommunication signals, data, and/or messages, including signals, data, or messages transmitted through text chat, instant messaging, and e-mail. In particular, a communication network may comprise all or a portion of a radio access network, a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, other suitable communication link, or any combination of the preceding.

Communication network 122 may contain or interface with any combination of hardware and/or software to provide its intended communication capabilities. For example, communication network 122 may contain any number or combination of communication platforms, routers, servers, gateways, switches, hubs, and/or conference bridges. In certain aspects, communication network 122 may also contain any number of application specific integrated circuits (ASIC), processors, microprocessors, algorithms, read-only memory (ROM) elements, random access memory (RAM) elements, erasable programmable ROM (EPROM), electrically erasable programmable ROM (EEPROM), field-programmable gate array (FPGA), or any other suitable element or object that is operable to facilitate the operations thereof.

In particular aspects of the present disclosure, communication network 122 implements a TCP/IP communication protocol. However, communication network 122 may implement any other suitable communication protocol for transmitting and receiving data packets within communication system 110. Using Internet Protocol (IP), each of the components coupled together by communication network 122 in communication system 110 may be identified in information directed using IP addresses. In this manner, communication network may support any form and/or combination of point-to-point, multicast, unicast or other techniques for exchanging media packets or information among components in communication system 110. In another aspect of the present disclosure, communication network 122 may receive and transmit data in a Session Initiation Protocol (SIP) environment. SIP is an application-layer control protocol that includes primitives for establishing, modifying, and terminating communication sessions. SIP works independently of underlying transport protocols and without dependency on the type of session that is being established. In further aspects, components of communication network 122 may use various other protocols and technologies, including but not limited to global system for mobile communications (GSM), code division multiple access (CDMA), and any other appropriate analog or digital wireless protocol or technology.

External MMD 126 represents a communications network controlled by a different service, provider than the rest of communication system 110. Accordingly, external MMD 126 may represent a roaming or visited network. In one aspect of the present disclosure, external MMD 126 is a network containing the policy center 130 architecture of communication system 110. External MMD 126 may also be an IP Multimedia Subsystem (IMS) network or any other combination of devices for transmitting and receiving data and information. Further, external MMD 126 may be equipped with any combination of devices or features provided for in communication network 122.

Access terminals 112 are the objects upon which user-specific system policy is enforced. Access terminals 112 may encompass a myriad of potential devices and infrastructure that may benefit from the operation of communication system 110. For example, an access terminal may include a Personal Digital Assistant (PDA), a cellular telephone, a standard telephone, an IP telephone, a personal computer, a mobile telephone, or any other suitable device that is operable to receive or transmit data. Each access terminal may also include suitable network equipment and appropriate infrastructure such as switches, routers, LANs, or gateways to facilitate a communication session within communication system 110. Further, in particular aspects, access terminals 112 may be SIP compatible elements.

Access terminals 112 may connect to a communication network in numerous ways. For instance, a connection might be made through a fixed broadband connection such as a digital subscriber line (DSL), cable modem, or Ethernet. Wireless access to communication network 122 may be initiated through a WLAN, WiMAX, or WiFi access point. Further, mobile access may be permitted via CDMA, CDMA 2000, GSM, UMTS, or any other mobile standard. Although FIGURE 4 illustrates a particular number and configuration of access terminals 112, communication system 110 contemplates any number or arrangement of such components.

Application server 140 hosts and executes applications. The term application refers generally to any services that a subscriber might see and use. In particular, applications may include push to talk over cellular (PoC), basic voice service, video-telephony, streaming movies, enterprise voice conferencing, voicemail and so on. In certain aspects, the applications are SIP applications 144 and/or non-SIP applications 144. In addition to applications, application server 140 may also include a media server 146 for transmitting various video, audio, and other data.

Policy center 130 implements and deploys policies throughout communication system 110. While the illustrated aspect indicates that policy center 130 comprises policy server 132, ACP 134, network resource manager 136, SDMC 138, and security center 139, policy center 130 may include any combination of elements operable to enforce policy in a communications network. Further, one skilled in the art will readily recognize that the components of policy center 130 may be combined in any suitable manner without departing from the scope of the present disclosure.

Policies might include which applications a user may run, when an application may be run, how network resources are allocated to an application or user, and any other decision that affects network resources or user interaction within a communication network. Moreover, a policy might be user-specific or generic to all users of communication system 110. For example, a user-specific policy might provide that a particular user may use certain applications. By contrast, a generic policy might require that a certain percentage of network bandwidth be allocated to streaming media. Enforcing both generic and user-specific policies enables a service provider to efficiently allocate resources within a communication network while simultaneously providing for the unique needs of an individual user.

In an aspect of the present disclosure, policy center 130 allocates network resources by application, and possibly associated application parameters, as opposed to application independent criteria such as bandwidth. This is done for all kinds of applications, both SIP and non-SIP based. Because users often purchase applications (as opposed to simply bandwidth), a subscriber does not care how much bandwidth an application requires, rather that the application is functional. Therefore, allocating network resources according to applications may allow a service provider to better serve its users.

Policy center 130 is also functional to dynamically adjust policy decisions based on changes to network properties. Because network resources constantly fluctuate, it is desirable to provide flexible policy enforcement. For example, if a user enters a poor coverage area while simultaneously running a video-telephony session and a multimedia game, policy center 130 might provide the user with a pop-up message informing the user that one of the two applications has been disabled. Alternatively, the message may query the user to elect which of the two applications to disable.

Another feature of policy center 130 is that it may provide user-specific policy for all applications and all users. Accordingly, unlike a P-CSCF and its associated Policy and Charging Rules Function (PCRF) in an IMS network, policy center 130 may assert policies for non-SIP applications. Further, by peering policy servers in various networks, a policy center in a visited network can assert user-specific policies from the home network of a roaming user, irrespective of whether the application uses SIP or not.

A further feature of policy center 130 is that it may implement an enhanced range of policies. While policy enforcement in networks such as the IP Multimedia Subsystem (IMS) is typically limited to accounting and QoS, policy center is operable to enforce policy for security, mobility, relay, transcoding, packet replication, and deep packet inspection. The broader range of policy enforcement gives a service provider greater control over its network, while enhancing user customization.

In the illustrated aspect, the components of policy center 130 may communicate amongst each other via DIAMETER interfaces. Uniform communication interfaces promotes interoperability and enables policy enforcement to be applied to applications invoked by different protocols. The DIAMETER protocol is a derivation from the Remote Authentication Dial In User Service (RADIUS) protocol which enables user Authentication, Authorization, and Accounting (AAA) services. Because authentication and authorization mechanisms vary according to application, DIAMETER applications are able to define their own messages and corresponding attributes. Accordingly, the DIAMETER protocol is not tied to a specific application running on top of it. Therefore, the DIAMETER protocol enables policy center 130 to implement network and user-specific policy for both SIP and non-SIP applications.

Services Data Management Center SDMC 138 is the central data repository in communication system 110. SDMC 138 may store access terminal specific data in addition to user specific data. Access terminal specific data may include the access terminal profile and network policy data which is not specific to any user. User specific data may include user policy data, user profile data (i.e. a user policy profile), and static user data. Static user data comprises information that is necessary to be retained by service enablers and the application server for deploying applications. In particular, static user data might include feature activation status, buddy lists, or authorization rules. SDMC 138 may also store SIP routing information, charging information, and any other repository data that may need to be stored and retrieved in the communications network. As illustrated in FIGURE 4, SDMC 138 interfaces with policy server 132. This allows SDMC to pass updated policy profiles and other information so that current policy may be enforced.

Security Center Server (SCS) 139 handles security related functions for the service provider within communication system 110. SCS may hold Layer 2, Layer 3, and application layer authentication and encryption keys. SCS may also store all inter-network element encryption and authentication keys. Further, SCS is functional to provide AAA services and information for devices and users within a communication system. In particular aspects, SCS 139 may interface with policy server 132 and SDMC 138 to provide policy server 132 with a combined security and quality of service (QoS) application policy.

Application Control Point 134 controls and manages SIP based multimedia communications applications. More particularly, ACP is responsible for authorizing SIP calls to and from access terminals and routing those calls to the proper terminating device whether it is another ACP, a gateway to a PSTN, or an external MMD. Accordingly, ACP is similar to the Call Session Control Function (CSCF) in an IMS communications network.

In operation, ACP 134 interacts with SIP applications 144 and policy server 132 to enforce policies at the applications layer. Because SIP applications 144 do not directly interact with policy server 132, ACP 134 requests authorization for invoking SIP applications from policy server 132 which in turn makes a determination of what resources the application is authorized to use. Based on this determination, the ACP provides SIP applications 144 with one or more service enablers to deploy the application. A service enabler might include user identity, registration, privacy, user security, presence, and location among others. Associated with each service enabler is a policy hook which controls the operation of the application. Thus, ACP 134 is the policy enforcement point (PEP) at the applications layer for SIP based applications.

Network resource manager 136 is responsible for policy enforcement at the bearer or network level. Network level policy enforcement addresses how network resources 150 are allocated to users within the network. In particular, network policies may include filtering packets, setting counters, providing Quality of Service (QoS) and radio resources, and allocating bandwidth, among others, or any other decision regarding the distribution of network resources.

Network resources 150 may include accounting, QoS, mobility, security, relay, transcoding, packet replication, and deep packet inspection. Accounting resources comprise packet counters and filters throughout the network which may be configured to generate records to SDMC 138 for billing purposes. The counters may also be configured with triggers to inform policy server 132 of specified occurrences. QoS refers to allocating bandwidth to control data flow in the network. Mobility relates to information regarding a user's communication session. In particular, such information may include duration of a network connection, the access network to which a user is connected, the user's signal strength, and the identity of the visited network (when roaming). Security relates to the identity of a network user, user authentication, and the relationship between user identity and operator policies. Relay references the allocation of network resource when a user connects to a home network provider through an intermediary provider. Transcoding refers to changing the encoding of media from one format to another. Packet replication refers to generating copies of packets (e.g. streams). Deep packet inspection refers to classifying network traffic based on application layer information deep within a packet.

Network resource manager 136 also controls "over-the-top" applications 148. Over-the-top applications are applications which have application servers that run outside of the service provider's network, but utilize network resources. One type of over-the-top applications are applications controlled by providers without a relationship to the home service provider. Such applications are referred to as "non-cooperative" over-the-top applications. Examples of such might include Skype or third-party instant messaging programs such as AIM or Yahoo. Other over-top-applications include applications in a home network invoked by a roaming user. If there is a business agreement between the home network service provider and the roaming network service provider, then such applications are referred to as "cooperative" over-the-top applications.

Because application servers for over-the-top applications do not have direct interaction with the policy server in the accessed network, such applications are supported via deep packet inspection at deep packet inspector 152. Deep packet inspection services may operate at various points in the network and function to classify network traffic according to application layer information deep within the packet.

Based on certain characteristics in the network traffic associated with the over-the-top application, the policy server for the hosting network may implement certain policies. In particular, if the over-the-top application is cooperative, then the policy server might request the network resource manager to allocate a certain bandwidth based on the business relationship between the service providers. By contrast, if the application is a non-cooperative over-the-top application, the policy server might request the network resource manager to provide reduced, or even no, bandwidth at all for the application session. It should be noted that while the deep packet inspector is illustrated as a component of network resource manager 136, deep packet inspector may be located anywhere in a communication network where it may provide its intended functions.

As represented in FIGURE 4, policy server 132 is the policy decision point (PDP) in policy center 130. As the PDP, policy server 132 is operable to receive policy profiles and determine a proper allocation of network resources and how applications should behave in light of the allocation. In particular, policy server 132 receives a user-specific or generic network policy profile from an internal memory cache or SDMC and splits policy decisions into the appropriate parts for ACP 134 and network resource manager 136 for application level and network level enforcement.

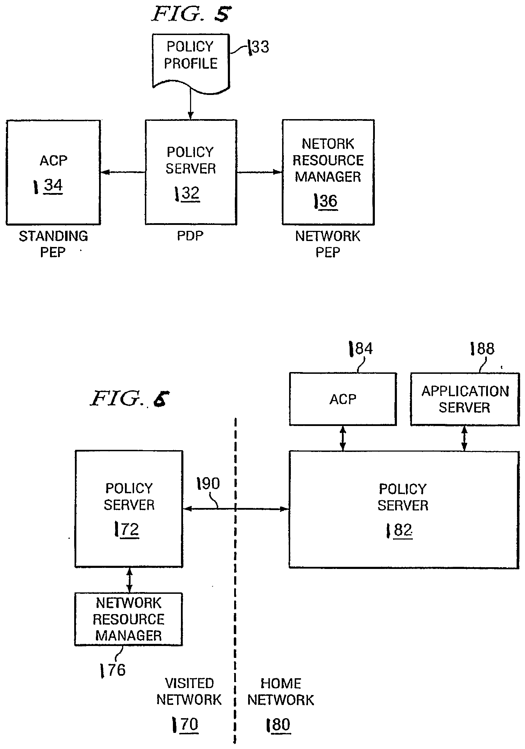

FIGURE 5 illustrates the split policy enforcement model implemented through policy server 132 in accordance with an aspect of the present disclosure. Because policy enforcement involves two sets of decisions the allocation of network resources to the application and application behavior in view of the allocated resources it may be advantageous to split policy enforcement between signaling and network layers.

As illustrated in FIGURE '5, policy server 132 receives a policy profile 133 and outputs a decision as to how an application may use available network resources. The decision is enforced in different places. Network resource manager 136 is the network layer policy enforcement point (PEP) and ACP is the PEP at the signaling layer. Accordingly, network resource manager might perform such tasks as filtering packets, setting counters, and providing QoS, whereas ACP might change which SIP applications are invoked or terminate a call.

A split policy enforcement model .offers several advantages. For example, having a single policy decision point allows for unified management of applications and network resources. This ensures that invoked applications have sufficient resources and that applications are not deployed without sufficient resources. Further, a split enforcement model enables policy peering wherein a home network may assert its policies when a user enters a roaming network, irrespective of whether the roamed-to network supports the application in question or not. Another benefit of the bifurcated approach is that policy may be enforced for both SIP and non-SIP applications. Specifically, ACP 134 is functional to interface with SIP applications and policy server 132 can invoke non-SIP applications either directly or by communicating with an application server 140.

Returning again to FIGURE 4, in an aspect of the present disclosure, policy server 132 is linked to non-SIP applications 142 over a DIAMETER interface. Non-SIP applications 142 comprise network applications supported by the home service provider which are not invoked using SIP protocol. Such applications may include gaming and streaming media. Unlike SIP applications 144, for which ACP 134 is the application layer PEP, the PEP for non-SIP applications 142 is the non-SIP application itself. In either case however, the network level PEP is the network resource manager. Accordingly, policy center 130 is functional to apply network and user policies to both SIP and non-SIP applications.

Policy server 132 may also interface with network resource manager 136. This connection permits policy server 132 to implement an array of network policies by linking it with network resources 150. For instance, mobility resources may allow for a mobility policy which defines what access networks a user may roam between (WiFi, WiMAX, CDMA, etc.). Similarly, a security policy might restrict which applications or network resources a user might access. Further, the deep packet inspection resources could allow policy server to implement a policy regarding how the network should handle applications for which there is not an application function. In particular, the policy server could provide that such applications can only be invoked in certain areas of the network or that the application be allotted reduced bandwidth. The foregoing policies are provided as examples' and should not restrict the scope of the disclosure as policy server 132 is operable to implement any number of policies regarding the allocation of network resources.

In a particular aspect of the present disclosure, policy server 132 is operable to store a copy of an active user's current policies and resource allocation in an internal memory cache. This information may be used to decide current capabilities and location of a user within the network. Storing such information in an internal memory cache enhances efficiency as the policy server 132 does not need to query SDMC 138 for an updated policy-profile each time there is a change in available network resources or a user invokes an application.

FIGURE 6 illustrates the operation of policy center 130 in accordance with one aspect of the present disclosure. As discussed, policy enforcement addresses both the allocation of network resources to an application and how an application behaves in view of the allocated resources. Thus, policy control begins with the invocation of an application. An application is invoked by sending an invoke request 161 to the application server 140 and/or ACP 134. While an application is typically invoked from an access terminal 112 (as illustrated in FIGURE 6), applications may also be invoked by the network on the user's behalf. For instance, the network might send the user an alert for a calendar appointment or a user might receive a communication session request from another user.

An invoked application may be an over-the top application, a SIP application, and/or a non-SIP application. The means for invoking the application is application dependent. As an example, in the case of an application related to presence, instant messaging, or multimedia communications, the invocation means is typically via SIP signaling. In particular, a video telephony application might be invoked with SIP INVITE messages and a presence subscription might be invoked by a SIP SUBSCRIBE message.

In response to receiving invoke request 161, application server 140 or ACP 134 will send an authorization request 162 to policy server 132. Authorization request 162 is a message seeking authorization to launch the invoked application with the parameters indicated. The request may contain information regarding the application that is being invoked, its associated parameters and the network resources the application will require. In addition, authorization request 162 may include the subscriber identity to allow policy server 132 to implement user-specific policies. It should be noted that, because ACP 134 serves as the PEP at the application signaling layer, if the invoked application is SIP based, then authorization request 162 is sent from the ACP.

In a particular aspect of the present disclosure, authorization request 162 may be in the form of one or more virtual token. A token is a text stream characterizing an invoked application and/or its associated parameters. The characterization includes the requested media stream(s), but may also include other parameters relevant to support implementing policy while the application is deployed. In particular, the token may include characterizations such as 'voice', 'video', 'telephony', 'interactive', 'Push-to-talk', and 'gaming'.

In an aspect of the present disclosure, the token is created using syntactic processing pattern matching techniques which analyze the contents of the application sought to be invoked. A pattern matching technique might involve using a rules engine which performs matching operations between a set of input data (e.g. a SIP message) and a set of matching criteria (e.g. a message filter criterion) and decides if a match exists. In response to a match, one or more tokens describing the application may be generated by either application server 140 or ACP 134. Once the rules engine has finished running through all of the applicable classification rules, the resulting tokens are passed to policy server 132 via authorization request 162. In addition to tokens, the message may contain information regarding the invoke message such as the IP address and ports for the media streams, the codecs, and the necessary bandwidth for the codecs.

Classifying applications as tokens offers several advantages. For instance, using a token to characterize an application allows for new applications to be added and controlled without requiring a software upgrade in the policy server. Specifically, because applications are represented as tokens, new ones can be added and policy can be implemented for them without requiring significant network modifications. A further advantage is that, because a software upgrade is unnecessary, deployment time for a new application is reduced.

Returning to FIGURE 6, in response to receiving authorization request 162, policy server 132 will obtain the user specific and/or network policy profile. In an aspect of the present disclosure, the profile may be stored locally in an internal memory cache within policy server 132 or in SDMC 138. Accordingly, policy server 132 will query its memory cache to determine whether the policy profile for the user is available. If the policy profile is not stored locally, policy server 132 will obtain the policy profile from SDMC 138 through policy message 163.

After obtaining the policy profile, policy server 132 makes a policy decision regarding the invoked application. This decision may be based on the contents of the token(s) in authorization request 162, the user's policy profile, the network's generic policy requirements, and/or the available network resources. The decision may be a "yes" or "no" answer. Alternatively, the decision may also be that the application may proceed, but with reduced or limited functionality. For example, a user might request to enter into a video-telephony session and given the user's policy profile and/or available network resources policy server 132 might determine that the user may proceed, but only with audio capabilities.

In an aspect of the present disclosure, the policy profile is represented as a series of Boolean expressions. The expressions may be parsed by Policy server 132 through a series of pattern matching rules similar to the classification rules used in token creation. Based on the policy profile and the contents thereof, the policy server may add, drop, or substitute tokens from the set contained in authorization request 162. For example, if a user's policy profile restricts access in a particular network to audio streaming media and authorization request 162 contains a video token, then policy server 132 may drop the video token from the set of tokens contained in authorization request 162. Once policy server 132 has run through all of the Boolean expressions in the policy profile, the end product is a set of tokens defining the policy for the invoked application. This set of tokens is returned to application server 140 and/or ACP 134 via authorize message 164.

In response to receiving authorize message 164, applications server 140, or ACP 134 in the case of SIP based applications, may continue the applicable application invocation(s). For SIP applications, ACP 134 may deploy the application by providing it with a set of service enablers. In a particular aspect of the present disclosure, ACP may implement its own policies that govern the way a service enabler functions. Such policies may be distinct from the policies of policy server 132 (to be discussed in greater detail below). For example, the policy server might tell ACP 134 that non-video applications of a certain bandwidth may be invoked. In response, ACP 134 may invoke appropriate applications. A benefit of this interdependency is that according to the available network resources and the user's policy profile totally different applications might be invoked. This offers a network service provider greater control over the subscriber's communication session and the applications that run on the network.

While an authorize message implements application side policy, instruct message 165 executes network level policy. In particular, instruct message 165 is a communication from policy server 132 to network resource manager 136 indicating how network resources should be allocated for a particular user. As an example, instruct message. 165 might tell network resource manager 136 to increase bandwidth for the call or restrict access to certain networks. With respect to over-the-top applications, instruct message 165 might tell the network resource manager to look for certain types of traffic.' In addition, the instruct message 165 might tell the network resource manager how to respond to a change in network condition in order to eliminate superfluous communication between the network resource manager and policy server. For example, the instruct message 165 might provide that if the subscriber is in a CDMA network, then a certain bandwidth should be allocated. However, if the subscriber enters an evolution data optimized (EVDO) network, extra bandwidth should be provided. This eliminates the process of the network resource manager communicating the change in networks to the policy server, the policy server making a policy decision, and communicating the decision back to the network resource manager.

Inform message 166 is an interaction between network resource manager 136 and policy server 132. An inform message 166 might be sent in two cases. First, when there is a change in a value of a variable corresponding to a network state that is relevant for policy server processing. Examples of this situation might include congestion in an access gateway, firing of a counter that was configured by the policy server, or a change in the point of attachment of a subscriber to the network. A second situation occurs when the user has requested an operation with respect to network resources for which authorization is required. For instance, when a user roams into a new coverage area, a decision must be made as to whether the communication session should be permitted to be handed off. In this situation, the user requests to engage in an activity which requires a reallocation of network resources and, thus, approval from the policy server is needed. In order to provide dynamic policy enforcement, the policy server is informed when either of the above-described situations occurs. Accordingly, inform message 166 is the means by which the policy server becomes apprised of a change in the status of a network resource and/or user request.

Tell message 167 is a communication between policy server 132 and access terminal 112. Tell message 167 might be sent by the policy server when it has made a decision regarding an application or its usage of network resources for which the access terminal needs to adjust its activities.. For instance, a user might be running a non-SIP application and the policy server elects to eliminate the allocated bandwidth. In such a situation, the access terminal should be notified to provide the user with a prompt indicating the termination of the application. Tell message 167 might also be sent in situations where the policy server is either incapable or unable to make a firm decision regarding policy and requests user input to decide. Such a situation might arise when a user is running a high bandwidth game as well as a video-telephony session and the network must terminate one of the applications. Accordingly, the policy server may tell the access terminal to provide the user with a prompt soliciting the user to select which of the applications to shutdown. It should be noted that whether or not a policy server sends tell message 167 is a matter of policy. In particular, a user's policy profile might provide that the user should be notified prior to having a communications session terminated.

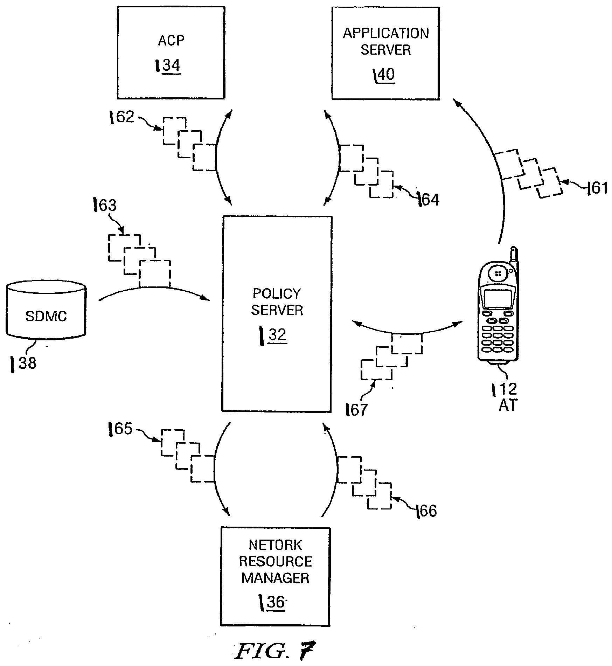

FIGURE 7 is a simplified block diagram illustrating policy peering in accordance with an aspect of the present disclosure. Policy peering refers to the ability of a home policy server and a policy server in a visited (e.g. roaming) network (or region) to each assert their own policies for a user. A principal objective of policy peering is to provide a seamless roaming experience for users so that a subscriber will experience substantially the same service in networks hosted by different providers, or different regions hosted by the same provider. Another objective of policy peering is to provide user-specific policy decision and enforcement while roaming. More specifically, when a user is in a roaming network, such as external MMD 126 in FIGURE 4, the policy server in the visited network does not have access to the user-specific policy profile as it is stored in the home network. The roaming network provider typically only knows that a user from a certain home network has entered the provider's service area. Thus, the roaming network is not aware of the user's identity let alone the user-specific policy profile associated with the user.

In a particular aspect of the present disclosure, policy peering is implemented by linking a policy server in the home network to a policy server in a visited network. A particular advantage of policy peering using policy servers is that it enables user-specific policy to be applied to non-SIP applications. Specifically, because policy server 132, as described above, is operable to implement policy for SIP and non-SIP applications, linking policy servers enables roaming policy enforcement regardless of the application. Furthermore, policy peering through policy servers also allows for user-specific policy to be implemented in a roaming network.

As illustrated in FIGURE 7, policy server 172 and policy server 182 are linked by connection 190. Policy servers 172 and 182 are similar to previously referenced policy server 132. Policy server 172 is located in visited network 170 and policy server 182 is situated in home network 180. Connection 190 might be a wireless or wireline link or any other means of connecting devices in networks hosted by different providers. It should be noted that visited network 170 and home network 180 may include any other components, or combination devices, as may be required to facilitate inter-network and intra-network communications and implement policy. In particular, it is envisioned that both visited network 170 and home network 180 may each have policy centers 130.

When a user enters 'visited network 170 and executes an application, the application runs in home network 180 and is controlled by policy server 182. Policy server 182 implements its policies as usual. However, the policies are a function of network state variables in visited network 170. Network state variables are determined by policy server 172 based on the status of network resources provided by network resource manager 176, which is substantially similar to network resource manager 136. Network state variables provide a "view" of the underlying network that a roaming network provider sends to the home network provider. Network state variables are not necessarily the actual state of resources (i.e. network resources) in the visited network. By contrast, they comprise values of resources in roaming network 170 which the roaming network service provider wants the home network service provider to view. The view that is provided is a function of roaming network policy. This may be based on the identity of the home network provider, a business agreement between the home and roaming networks, and/or the actual state of the network itself. Because the identity of the subscriber is typically unknown, the view is generally not a function of subscriber identity. Further, because the applications the subscriber is running are known and controlled by the home network, the view is generally not a function of the active applications. Once policy server 172 determines the applicable network state variables, it communicates them to policy server 182 over link 190.

In response to receiving the network state variables, policy server 182 implements the policy of the home network. Policy enforcement at the applications level is similar to the standard home network policy enforcement previously described. In particular, policy server 182 may implement policy at the application level for SIP applications by communicating with application control point 184 and by directly communicating with application server 188 for non-SIP applications. It should be noted that ACP 184 is substantially similar to ACP 134 and application server 188 is substantially similar to application server 140.

The primary distinction between policy peering in a roaming situation and policy enforcement when a user is in a home network is with respect to network level policy enforcement. This is because the home network service provider does not have direct control over the resources in the roaming network. Therefore, instead of a network resource manager in home network 180 dictating how resources should be allocated, network resource manager 176 in the roaming network serves as the PEP for the roaming subscriber. Accordingly, home policy server 182 is viewed as an application by visited policy server 172. That is, home policy server 182 makes requests which call for network resources and the resources are allocated between it and other applications. Thus, both the visited and home network service providers are able to enforce their own policies.

Although the present disclosure has been described with particular aspects, it should be understood that various other changes, substitutions, or modifications may be made hereto without departing from the spirit and scope of the present disclosure. For example, policy center 130 was described with reference to a number of components. These components may be combined, rearranged, or positioned in order to accommodate particular routing architectures or communication needs In addition, the interfacing and communication among the components may be altered or varied without departing from the intended scope of the disclosure. Accordingly, the present disclosure contemplates great flexibility in the arrangement of the components of policy center 130 as well as their interactions.

Numerous other changes, substitutions, variations, alterations, and modifications may be ascertained by one skilled in the art and it is intended that the -present disclosure encompass such changes, variations, alterations, and modifications as falling within the scope of the appended claims.

## Claims

1. A method for providing feature services in a multimedia communication environment, the method comprising:
receiving a signaling message, which can be a request or a response;
running one or more scripts to compare the signaling message with control data to identify one or more service enablers (18) that are responsive to the signaling message, the one or more service enablers comprising a registration service enabler configured to facilitate registration of an access terminal with a network; and
invoking each identified service enabler, wherein each identified service enabler operates in accordance with an associated policy hook (22), wherein the policy hooks are externally configurable and control the operation of the service enablers, the registration service enabler invoked to register a binding between one or more user identities and the access terminal.

2. The method of Claim 1, wherein at least one of the service enablers is a service capability interaction manager that may maintain dialog state and may be further responsive to the dialog state.

3. The method of Claim 1, wherein the control data is selected from the group consisting of:
a signaling message response value or response parameter value;
provisioned data;
dynamic data; and
data acquired from an operating environment of the scripts.

4. The method of Claim 3, wherein the scripts further identify one or more application servers (6 8, 10) that are responsive to the signaling message.

5. The method of Claim 1, wherein the control data is in an XML document format and XPath is used to enable comparison with one or more elements in the XML document.

6. The method of Claim 1, wherein the service enablers are selected from the group consisting of:
a user identity service enabler;
the registration service enabler;
a bearer interaction service enabler;
a privacy service enabler;
a request authorization service enabler;
a user data repository service enabler;
a presence service enabler;
a location service enabler;
a user security service enabler;
a SIP infrastructure security service enabler;
a service capability interaction manager service enabler;
a SIP compression service enabler;
a NAT and firewall traversal service enabler;
a request routing service enabler;
a voice-over-IP service peering enabler; and
an accounting service enabler.

7. A multimedia communication system comprising:
one or more service enablers including a registration service enabler configured to facilitate registration of an access terminal with a network;
a policy hook (22) associated with each service enabler, wherein the policy hooks are externally configurable and control the operation of the service enablers; and
a processing component (16, 20) operable to:
run one or more scripts to compare a signaling message with control data to identify one or more of the service enablers that are responsive to the signaling message; and
invoke each identified service enabler in accordance with the associated policy hook, the registration service enabler invoked to register a binding between one or more user identities and the access terminal.

8. The system of Claim 7, wherein at least one of the invoked service enablers is a service capabilities interaction manager which uses a user-specific script, and is operable to identify one or more other service enablers or application servers to provide user-specific multimedia communication features.

9. The system of Claim 8, wherein at least one of the identified application servers inserts one or more tokens into the same or a second signaling message, the service capabilities interaction manager receives that signaling message from the application server, and the service capabilities interaction manager compares the token(s) to the control data to identify one or more of the application servers to provide user-specific multimedia communication features.

10. The system of Claim 7, wherein each service enabler is identified by a token that may be changed without requiring software upgrades.

11. The system of Claim 7, wherein the control data is selected from the group consisting of:
a signaling message response value or response parameter value;
provisioned data;
dynamic data;
data acquired from an external application; and
data acquired from an associated operating system.

12. The system of Claim 7, wherein the control data is one or more elements selected from an extensible markup language (XML) document using XPath.

13. The system of Claim 7, wherein the signaling message is associated with one or more media streams, and at least one of the service enablers is a bearer interaction management service enabler operable to associate an application identifier token with the signaling message and to associate a media stream identifier token with each media stream associated with the signaling message; and further comprising:
sending the application identifier token and the media stream identifier token (s) to a policy server;
receiving one or more tokens from the policy server (132); and
providing the token (s) from the policy server to at least one of the service enablers where it can be used as input for further comparison with control data.

14. The system of Claim 7, wherein the service enablers are selected from the group consisting of:
a user identity service enabler;
the registration service enabler;
a bearer interaction service enabler;
a privacy service enabler;
a request authorization service enabler;
a user data repository service enabler;
a presence service enabler;
a location service enabler;
a user security service enabler;
a SIP infrastructure security service enabler;
a service capability interaction manager service enabler;
a SIP compression service enabler;
a NAT and firewall traversal service enabler;
a request routing service enabler;
a voice-over-IP service peering enabler; and
an accounting service enabler.

15. A system according to claim 7, further comprising:
a signaling protocol interface;
a programmable flow engine (16);
a rules engine (20);
wherein the rules engine is operable to match expressions in input data; and
wherein the programmable flow engine is operable to process signaling messages received through the signaling protocol interface, to interact with the rules engine to compare the signaling messages with control data, and to interact with one or more service enablers or application servers to provide multimedia communication features responsive to the signaling messages.

16. The system of Claim 15, wherein an operation to match expressions is selected from the group consisting of:
a regular expression matching operation;
an XML document matching operation; and
an XPath based matching operation where XPath is used to select one or more elements from an XML document as input to the matching operation.

17. The system of Claim 15, wherein the control data is selected from the group consisting of:
a signaling message response value or response parameter value;
dialog state information;
application server state information provided in the form of one or more tokens;
provisioned data;
dynamic data;
presence data;
time of day;
operating environment state information;
one or more tokens returned from a policy server; and
one or more tokens returned from one of the service enablers.

18. The system of Claim 15, further comprising a policy server (132), and wherein at least one of the service enablers is a bearer interaction service enabler operable to identify an application descriptor associated with the signaling messages, to identify a media stream descriptor associated with each media stream in the signaling message, and to interact with the policy server and the service capabilities manager to provide user-specific multimedia communication features according to one or more policies stored in the policy server.

19. The system of Claim 18, wherein the application descriptor and the media descriptor (s) are passed to the policy server and the policy server returns one or more tokens that are processed by one or more of the service enablers.

20. The system of Claim 18, wherein the application descriptor and the media stream descriptor are constructed by a script that performs a syntactic computation on the signaling messages, and the script can be changed without requiring software upgrades.

21. The system of Claim 20, wherein the syntactic computation is a regular expression match.

22. A computer-readable medium comprising computer code for providing feature services in a multimedia environment such that when executed is operable to:
compare a signaling message with control data to identify one or more service enablers (18) that are responsive to the signaling message, the one or more service enablers (18) including a registration service enabler configured to facilitate registration of an access terminal with a network; and
invoke each responsive service enabler in accordance with an associated policy hook(22), wherein the policy hooks are externally configurable and control the operation of the service enablers, the registration service enabler invoked to register a binding between one or more user identities and the access terminal.

23. The medium of Claim 22, wherein at least one of the service enablers is a service capability interaction manager that may maintain dialog state associated with a user communication session and may invoke additional service enablers responsive to the dialog state.

24. The medium of Claim 22, wherein each service enabler is identified by a token that may be changed without requiring software upgrades.

25. The medium of Claim 22, wherein the control data is selected from the group consisting of:
a signaling message response value or response parameter value;
provisioned data;
dynamic data;
data acquired from an external application; and
data acquired from an associated operating system.

26. The medium of Claim 22, wherein the service enablers are selected from the group consisting of:
a user identity service enabler;
the registration service enabler;
a bearer interaction service enabler;
a privacy service enabler;
a request authorization service enabler;
a user data repository service enabler;
a presence service enabler;
a location service enabler;
a user security service enabler;
a SIP infrastructure security service enabler;
a service capability interaction manager service enabler;
a SIP compression service enabler;
a NAT and firewall traversal service enabler;
a request routing service enabler;
a voice-over-IP service peering enabler; and
an accounting service enabler.

## Revendications

1. Procédé de fourniture de services dans un environnement de communication multimédia, le procédé comprenant de :
recevoir un message de signalisation, qui peut être une requête ou une réponse ;
lancer un ou plusieurs scripts pour comparer le message de signalisation à des données de contrôle pour identifier un ou plusieurs activateurs de service (18) qui sont sensibles au message de signalisation, l'un ou plusieurs activateurs de service comprenant un activateur de service d'enregistrement conçu pour faciliter l'enregistrement d'un terminal d'accès à un réseau ; et
appeler chaque activateur de service identifié, chaque activateur de service identifié fonctionnant selon un *hook* de politique (22) associé, les *hooks* de politique étant configurables en externe et contrôlant le fonctionnement des activateurs de service, l'activateur de service d'enregistrement étant appelé pour enregistrer une liaison entre une ou plusieurs identités d'utilisateur et le terminal d'accès.

2. Procédé selon la revendication 1, dans lequel au moins un des activateurs de service est un gestionnaire d'interaction de capacité de service qui peut maintenir un état de dialogue et peut être, en outre, sensible à l'état de dialogue.

3. Procédé selon la revendication 1, dans lequel les données de contrôle sont choisies dans le groupe constitué de :
une valeur de réponse à un message de signalisation ou
une valeur de paramètre de réponse ;
des données provisionnées ;
des données dynamiques ; et
des données acquises à partir d'un environnement opérationnel des scripts.

4. Procédé selon la revendication 3, dans lequel les scripts identifient, en outre, un ou plusieurs serveurs d'application (6, 8, 10) qui sont sensibles au message de signalisation.

5. Procédé selon la revendication 1, dans lequel les données de contrôle sont sous un format de document XML et XPath sert à permettre la comparaison avec un ou plusieurs éléments dans le document XML.

6. Procédé selon la revendication 1, dans lequel les activateurs de service sont choisis dans le groupe constitué de :
un activateur de service d'identité d'utilisateur ;
un activateur de service d'enregistrement ;
un activateur de service d'interaction de porteuses ;
un activateur de service de confidentialité ;
un activateur de service d'autorisation de requête ;
un activateur de service de stockage de données d'utilisateur ;
un activateur de service de présence ;
un activateur de service de localisation ;
un activateur de service de sécurité d'utilisateur ;
un activateur de service de sécurité d'infrastructure SIP ;
un activateur de service de gestionnaire d'interactions de capacités de service ;
un activateur de service de compression SIP ;
un activateur de service de traversée de pare-feu et NAT ;
un activateur de service d'acheminement de requête ;
un activateur d'appariement de services de voix sur IP ; et
un activateur de service de comptabilité.

7. Système de communications multimédia comprenant :
un ou plusieurs activateurs de service incluant un activateur de service d'enregistrement configuré pour faciliter l'enregistrement d'un terminal d'accès à un réseau ;
un *hook* de politique (22) associé à chaque activateur de service, les *hooks* de politique étant configurables en externe et contrôlant le fonctionnement des activateurs de service ; et
un composant de traitement (16, 20) utilisable pour :
lancer un ou plusieurs scripts pour comparer un message de signalisation à des données de contrôle pour identifier un ou plusieurs des activateurs de service qui sont sensibles au message de signalisation ; et
appeler chaque activateur de service identifié selon le *hook* de politique associé, l'activateur de service d'enregistrement appelé pour enregistrer une liaison entre une ou plusieurs identités d'utilisateur et le terminal d'accès.

8. Système selon la revendication 7, dans lequel au moins un des activateurs de service appelés est un gestionnaire d'interaction de capacité de service qui utilise un script spécifique d'utilisateur et est utilisable pour identifier un ou plusieurs autres activateurs de service ou serveurs d'application pour fournir des caractéristiques de communication multimédia spécifiques.

9. Système selon la revendication 8, dans lequel au moins un des serveurs d'application identifiés insère un ou plusieurs jetons dans le même ou un second message de signalisation, le gestionnaire d'interaction de capacité de service reçoit ce message de signalisation du serveur d'application, et le gestionnaire d'interaction de capacité de service compare le ou les jetons aux données de commande pour identifier un ou plusieurs des serveurs d'application pour fournir des caractéristiques de communication multimédia spécifiques.

10. Système selon la revendication 7, dans lequel chaque activateur de service est identifié par un jeton qui peut être modifié sans nécessiter d'actualisations logicielles.

11. Système selon la revendication 7, dans lequel les données de commande sont choisies dans le groupe constituées de :
une valeur de réponse à un message de signalisation ou
une valeur de paramètre de réponse ;
des données provisionnées ;
des données dynamiques ;
des données acquises depuis une application externe ;
et
des données acquises depuis un système opérationnel associé.

12. Système selon la revendication 7, dans lequel les données de commande sont un ou plusieurs éléments choisis dans un document sous langage de balisage extensible (XML) en utilisant XPath.

13. Système selon la revendication 7, dans lequel le message de signalisation est associé à un ou plusieurs flux média, et au moins un des activateurs de service est un activateur de service gestionnaire d'interactions de porteuses utilisable pour associer un jeton identifiant d'application au message de signalisation et pour associer un jeton identifiant de flux média à chaque flux média associé au message de signalisation ; et comprenant en outre de :
envoyer le jeton identifiant d'application et le ou les jetons identifiants de flux média à un serveur de politique ;
recevoir un ou plusieurs jetons du serveur de politique (132) ; et
fournir le ou les jetons du serveur de politique à au moins un des activateurs de service, où il peut servir d'entrée pour plus de comparaison avec des données de contrôle.

14. Système selon la revendication 7, dans lequel les activateurs de service sont choisis dans le groupe constitué de :
un activateur de service d'identité d'utilisateur ;
un activateur de service d'enregistrement ;
un activateur de service d'interaction de porteuses ;
un activateur de service de confidentialité ;
un activateur de service d'autorisation de requête ;
un activateur de service de stockage de données d'utilisateur ;
un activateur de service de présence ;
un activateur de service de localisation ;
un activateur de service de sécurité d'utilisateur ;
un activateur de service de sécurité d'infrastructure SIP ;
un activateur de service de gestionnaire d'interactions de capacités de service ;
un activateur de service de compression SIP ;
un activateur de service de traversée de pare-feu et NAT ;
un activateur de service d'acheminement de requête ;
un activateur d'appariement de services de voix sur IP ; et
un activateur de service de comptabilité.

15. Système selon la revendication 7, comprenant en outre :
une interface de protocole de signalisation ;
un moteur de gestion de flux (16) ;
un moteur de règles (20) ;
dans lequel le moteur de règles est utilisable pour assortir des expressions dans des données d'entrée ;
et
dans lequel le moteur de gestion de flux est utilisable pour traiter des messages de signalisation reçus par l'interface de protocole de signalisation,
pour interagir avec le moteur de règles pour comparer les messages de signalisation à des données de contrôle, et pour interagir avec un ou plusieurs activateurs de service ou serveurs d'application pour fournir des caractéristiques de communication multimédia sensibles aux messages de signalisation.

16. Système selon la revendication 15, dans lequel une opération pour assortir des expressions est choisie dans le groupe consistant en :
une opération d'assortiment d'expressions régulières ;
une opération d'assortiment de documents XML ; et
une opération d'assortiment basées sur XPath, où XPath sert à sélectionner un ou plusieurs éléments d'un document XML comme entrée de l'opération d'assortiment.

17. Système selon la revendication 15, dans lequel les données de contrôle sont sélectionnées dans le groupe constitué de :
une valeur de réponse à un message de signalisation ou une valeur de paramètre de réponse ;
des informations d'état de dialogue ;
des informations d'état de serveur d'application fournies sous la forme d'un ou plusieurs jetons ;
des données provisionnées ;
des données dynamiques ;
des données de présence ;
l'heure du jour ;
des informations d'état d'environnement opérationnel ;
un ou plusieurs jetons renvoyés d'un serveur de politique ; et
un ou plusieurs jetons renvoyés d'un des activateurs de service.

18. Système selon la revendication 15, comprenant en outre un serveur de politique (132) et dans lequel au moins un des activateurs de service est un activateur de service d'interaction de porteuses utilisable pour identifier un descripteur d'application associé aux messages de signalisation, pour identifier un descripteur de flux média associé à chaque flux média dans le message de signalisation et pour interagir avec le serveur de politique et le gestionnaire de capacités de service pour fournir des caractéristiques de communication multimédia spécifiques d'utilisateur en fonction d'une ou plusieurs politiques enregistrées dans le serveur de politique.

19. Système selon la revendication 18, dans lequel le descripteur d'application et le ou les descripteurs média sont adaptés au serveur de politique et le serveur de politique renvoie un ou plusieurs jetons qui sont traités par un ou plusieurs des activateurs de service.

20. Système selon la revendication 18, dans lequel le descripteur d'application et le descripteur de flux média sont constitués d'un script qui effectue une computation syntaxique des messages de signalisation, et le script peut être modifié sans nécessiter d'actualisations logicielles.

21. Système selon la revendication 20, dans lequel la computation syntaxique est un assortiment d'expressions régulières.

22. Support lisible par ordinateur contenant du code informatique pour fournir des services dans un environnement multimédia, de sorte que lorsqu'il est exécuté, il est utilisable pour :
comparer un message de signalisation à des données de contrôle pour identifier un ou plusieurs des activateurs de service (18) qui sont sensibles au message de signalisation, l'un ou plusieurs des activateurs de service (18) incluant un activateur de service d'enregistrement conçu pour faciliter l'enregistrement d'un terminal d'accès à un réseau ;
et
appeler chaque activateur de service sensible selon un *hook* de politique (22) associé, les *hooks* de politique étant configurables en externe et contrôlant le fonctionnement des activateurs de service, l'activateur de service d'enregistrement étant appelé pour enregistrer une liaison entre une ou plusieurs identités d'utilisateur et le terminal d'accès.

23. Support selon la revendication 22, dans lequel au moins un des activateurs de service est un gestionnaire d'interaction de capacité de service qui peut maintenir un état de dialogue associé à une session de communication d'utilisateur et peut appeler des activateurs de service supplémentaires sensibles à l'état de dialogue.

24. Support selon la revendication 22, dans lequel chaque activateur de service est identifié par un jeton qui peut être modifié sans nécessiter d'actualisations logicielles.

25. Support selon la revendication 22, dans lequel les données de contrôle sont choisies dans le groupe constitué de :
une valeur de réponse à un message de signalisation ou une valeur de paramètre de réponse ;
des données provisionnées ;
des données dynamiques ; et
des données acquises à partir d'une application externe ; et
des données acquises depuis un système opérationnel associé.

26. Support selon la revendication 22, dans lequel les activateurs de service sont choisis dans le groupe constitué de :
un activateur de service d'identité d'utilisateur ;
un activateur de service d'enregistrement ;
un activateur de service d'interaction de porteuses ;
un activateur de service de confidentialité ;
un activateur de service d'autorisation de requête ;
un activateur de service de stockage de données d'utilisateur ;
un activateur de service de présence ;
un activateur de service de localisation ;
un activateur de service de sécurité d'utilisateur ;
un activateur de service de sécurité d'infrastructure SIP ;
un activateur de service de gestionnaire d'interactions de capacités de service ;
un activateur de service de compression SIP ;
un activateur de service de traversée de pare-feu et NAT ;
un activateur de service d'acheminement de requête ;
un activateur d'appariement de services de voix sur IP ; et
un activateur de service de comptabilité.

## Patentansprüche

1. Verfahren zum Bereitstellen von Merkmalsdiensten in einer Multimedia-Kommunikationsumgebung, wobei das Verfahren beinhaltet:
Empfangen einer Signalisierungsnachricht, welche eine Anfrage oder eine Antwort sein kann;
Durchlaufen eines oder mehrerer Skripten, um die Signalisierungsnachricht mit Steuerdaten zu vergleichen, um einen oder mehrere Service Enabler (18) zu identifizieren, die auf die Signalisierungsnachricht ansprechen, wobei der eine oder die mehreren Service Enabler einen Registrierungs-Service Enabler aufweisen, der dazu konfiguriert ist, die Registrierung eines Zugangsterminals bei einem Netzwerk zu ermöglichen; und
Aufrufen jedes identifizierten Service Enablers, wobei jeder identifizierte Service Enabler gemäß einem zugehörigen Richtlinien-Hook (22) arbeitet, wobei die Richtlinien-Hooks extern konfigurierbar sind und den Betrieb der Service Enabler steuern, wobei der Registrierungs-Service Enabler dazu aufgerufen wird, eine Verbindung zwischen einer oder mehreren Benutzeridentitäten und dem Zugangsterminal zu registrieren.

2. Verfahren nach Anspruch 1, wobei wenigstens einer der Service Enabler ein Dienstfähigkeits-Interaktionsmanager ist, der einen Dialogzustand aufrechterhalten kann und des Weiteren auf den Dialogzustand ansprechbar sein kann.

3. Verfahren nach Anspruch 1, wobei die Steuerdaten ausgewählt werden aus der Gruppe bestehend aus:
einem Signalisierungsnachricht-Rückmeldewert oder -Rückmeldeparameterwert;
bereitgestellten Daten;
dynamischen Daten; und
Daten, die aus einer Betriebsumgebung der Skripte erhalten werden.

4. Verfahren nach Anspruch 3, wobei die Skripte des Weiteren einen oder mehrere Anwendungsserver (6 8, 10) identifizieren, die auf die Signalisierungsnachricht ansprechbar sind.

5. Verfahren nach Anspruch 1, wobei die Steuerdaten in einem XML-Dokumentformat sind und XPath verwendet wird, um einen Vergleich mit einem oder mehreren Elementen in dem XML-Dokument zu ermöglichen.

6. Verfahren nach Anspruch 1, wobei die Service Enabler ausgewählt werden aus der Gruppe bestehend aus:
einem Benutzeridentitäts-Service Enabler;
dem Registrierungs-Service Enabler;
einem Träger-Interaktions-Service Enabler;
einem Datenschutz-Service Enabler;
einem Anfrageauthorisierungs-Service Enabler;
einem Benutzerdaten-Ablage Service Enabler;
einem Anwesenheits-Service Enabler;
einem Standort-Service Enabler;
einem Benutzersicherheits-Service Enabler;
einem SIP Infrastruktur-Sicherheits-Service Enabler;
einem Dienstfähigkeits-Interaktionsmanager Service Enabler;
einem SIP Kompressions-Service Enabler;
einem NAT und Firewall-Transversal-Service Enabler;
einem Anfragerouting-Service Enabler;
einem Voice-over-IP Service Peering Enabler; und
einem Buchhaltungs-Service Enabler.

7. Multimedia-Kommunikationssystem, das aufweist:
einen oder mehrere Service Enabler einschließlich eines Registrierungs-Service Enablers, der dazu konfiguriert ist, die Registrierung eines Zugangsterminals bei einem Netzwerk zu ermöglichen;
einen Richtlinien-Hook (22), der zu jedem Service Enabler gehört, wobei die Richtlinien-Hooks extern konfigurierbar sind und den Betrieb der Service Enabler steuern; und
eine Verarbeitungskomponente (16, 20), die betreibbar ist zum:
Durchlaufen eines oder mehrerer Skripten, um eine Signalisierungsnachricht mit Steuerdaten zu vergleichen, um einen oder mehrere der Service Enabler zu identifizieren, die auf die Signalisierungsnachricht ansprechbar sind; und
Aufrufen jedes identifizierten Service Enablers gemäß dem zugehörigen Richtlinien-Hook, wobei der Registrierungs-Service Enabler dazu aufgerufen wird, eine Verbindung zwischen einer oder mehreren Benutzeridentitäten und dem Zugangsterminal zu registrieren.

8. System nach Anspruch 7, wobei wenigstens einer der aufgerufenen Service Enabler ein Dienstfähigkeits-Interaktionsmanager ist, der ein benutzerspezifisches Skript verwendet, und dazu betreibbar ist, einen oder mehrere andere Service Enabler oder Anwendungsserver zu identifizieren, um benutzerspezifische Multimedia-Kommunikationsmerkmale bereitzustellen.

9. System nach Anspruch 8, wobei wenigstens einer der identifizierten Anwendungsserver einen oder mehrere Token in dieselbe oder eine zweite Signalisierungsnachricht einfügt, der Dienstfähigkeits-Interaktionsmanager die Signalisierungsnachricht von dem Anwendungsserver empfängt und der Dienstfähigkeits-Interaktionsmanager der/die Token mit den Steuerdaten vergleicht, um einen oder mehrere der Anwendungsserver zu identifizieren, um benutzerspezifische Multimedia-Kommunikationsmerkmale bereitzustellen.

10. System nach Anspruch 7, wobei jeder Service Enabler durch einen Token identifiziert wird, der geändert werden kann, ohne Softwareupgrades zu benötigen.

11. System nach Anspruch 7, wobei die Steuerdaten ausgewählt werden aus der Gruppe bestehend aus:
einem Signalisierungsnachricht-Rückmeldewert oder -Rückmeldeparameterwert;
bereitgestellten Daten;
dynamischen Daten;
Daten, die aus einer externen Anwendung erhalten werden; und
Daten, die aus einem zugehörigen Betriebssystem erhalten werden.

12. System nach Anspruch 7, wobei die Steuerdaten ein oder mehrere Elemente sind, die aus einem Extensible Markup Language (XML) -Dokument unter Verwendung von XPath ausgewählt werden.

13. System nach Anspruch 7, wobei die Signalisierungsnachricht zu einem oder mehreren Medienströmen gehört, und wenigstens einer der Service Enabler ein Träger-Interaktionsverwaltungs-Service Enabler ist, der dazu betreibbar ist, einen Anwendungskennungs-Token mit der Signalisierungsnachricht zu assoziieren und einen Medienstromkennungs-Token mit jedem Medienstrom zu assoziieren, der zu der Signalisierungsnachricht gehört; und das des Weiteren aufweist:
Senden des Anwendungskennungs-Tokens und des/der Medienstromkennungs-Token(s) an einen Richtlinienserver;
Empfangen eines oder mehrerer Zeichen bzw. Token von dem Richtlinienserver (132); und
Bereitstellen des/der Token(s) von dem Richtlinienserver an wenigstens einen der Service Enabler, wo er als Eingabe zum weiteren Vergleich mit Steuerdaten verwendet werden kann.

14. System nach Anspruch 7, wobei die Service Enabler ausgewählt werden aus der Gruppe bestehend aus:
einem Benutzeridentitäts-Service Enabler;
dem Registrierungs-Service Enabler;
einem Träger-Interaktions-Service Enabler;
einem Datenschutz-Service Enabler;
einem Anfrageauthorisierungs-Service Enabler;
einem Benutzerdaten-Ablage Service Enabler;
einem Anwesenheits-Service Enabler;
einem Standort-Service Enabler;
einem Benutzersicherheits-Service Enabler;
einem SIP Infrastruktur-Sicherheits-Service Enabler;
einem Dienstfähigkeits-Interaktionsmanager Service Enabler;
einem SIP Kompressions-Service Enabler;
einem NAT und Firewall-Transversal-Service Enabler;
einem Anfragerouting-Service Enabler;
einem Voice-over-IP Service Peering Enabler; und
einem Buchhaltungs-Service Enabler.

15. System nach Anspruch 7, das des Weiteren aufweist:
eine Signalisierungsprotokollschnittstelle;
eine programmierbare Strömungsmaschine (16);
eine Regelmaschine (20);
wobei die Regelmaschine dazu betreibbar ist, Ausdrücke in Eingangsdaten abzugleichen; und
wobei die programmierbare Strömungsmaschine dazu betreibbar ist, Signalisierungsnachrichten zu verarbeiten, die durch die Signalisierungsprotokollschnittstelle empfangen werden, mit der Regelmaschine zu interagieren, um die Signalisierungsnachrichten mit Steuerdaten zu vergleichen, und mit einem oder mehreren Service Enablern oder Anwendungsservern zu interagieren, um Multimedia-Kommunikationsmerkmale im Ansprechen auf die Signalisierungsnachrichten bereitzustellen.

16. System nach Anspruch 15, wobei ein Betrieb zum Abgleichen von Ausdrücken ausgewählt wird aus der Gruppe bestehend aus:
einer regulären Ausdrucksabgleichoperation;
einer XML-Dokument-Abgleichoperation; und
einer XPath-basierten Abgleichoperation, wobei XPath verwendet wird, um ein oder mehrere Elemente aus einem XML-Dokument als Eingabe in die Abgleichoperation auszuwählen.

17. System nach Anspruch 15, wobei die Steuerdaten ausgewählt werden aus der Gruppe bestehend aus:
einem Signalisierungsnachricht-Rückgabewert oder -Rückgabeparameterwert;
Dialogzustandsinformationen;
Anwendungsserver-Zustandsinformationen, die in Form von einem oder mehreren Token bereitgestellt werden,
bereitgestellten Daten;
dynamischen Daten;
Anwesenheitsdaten;
Tageszeit;
Betriebsumgebungs-Zustandsinformationen;
einem oder mehreren Token, die von einem Richtlinienserver zurückgesendet werden; und
einem oder mehreren Token, die von einem der Service Enabler zurückgesendet werden.

18. System nach Anspruch 15, das des Weiteren einen Richtlinienserver (132) aufweist, und wobei wenigstens einer der Service Enabler ein Träger-Interaktions-Service Enabler ist, der dazu betreibbar ist, einen Anwendungsdeskriptor zu identifizieren, der den Signalisierungsnachrichten zugeordnet ist, einen Medienstromdeskriptor zu identifizieren, der jedem Medienstrom in der Signalisierungsnachricht zugeordnet ist, und mit dem Richtlinienserver und dem Dienstfähigkeitsmanager zu interagieren, um benutzerspezifische Multimedia-Kommunikationsmerkmale gemäß einer oder mehreren Richtlinien, die in dem Richtlinienserver gespeichert sind, bereitzustellen.

19. System nach Anspruch 18, wobei der Anwendungsdeskriptor und der/die Mediendeskriptor(en) an den Richtlinienserver weitergeleitet werden und der Richtlinienserver einen oder mehrere Token zurücksendet, die von einem oder mehreren der Service Enabler verarbeitet werden.

20. System nach Anspruch 18, wobei der Anwendungsdeskriptor und der Medienstromdeskriptor von einem Skript erstellt werden, das eine Syntaxberechnung der Signalisierungsnachrichten durchführt, wobei das Skript geändert werden kann, ohne Softwareupgrades zu benötigen.

21. System nach Anspruch 20, wobei die Syntaxberechnung eine reguläre Ausdrucksabgleich ist.

22. Computerlesbares Medium mit Computercode zum Bereitstellen von Merkmalsdiensten in einer Multimediaumgebung, der bei der Ausführung betreibbar ist zum:
Vergleichen einer Signalisierungsnachricht mit Steuerdaten, um einen oder mehrere Service Enabler (18) zu identifizieren, die auf die Signalisierungsnachricht ansprechen, wobei der eine oder die mehreren Service Enabler (18) einen Registrierungs-Service Enabler aufweisen, der dazu konfiguriert ist, die Registrierung eines Zugangsterminals bei einem Netzwerk zu ermöglichen; und
Aufrufen jedes ansprechenden Service Enablers gemäß einem zugehörigen Richtlinien-Hook (22), wobei die Richtlinien-Hooks extern konfigurierbar sind und den Betrieb der Service Enabler steuern, wobei der Registrierungs-Service Enabler dazu aufgerufen wird, eine Verbindung zwischen einer oder mehreren Benutzeridentitäten und dem Zugangsterminal zu registrieren.

23. Medium nach Anspruch 22, wobei wenigstens einer der Service Enabler ein Dienstfähigkeits-Interaktionsmanager ist, der einen Dialogzustand aufrechterhalten kann, der zu einer Benutzerkommunikationssitzung gehört, und zusätzliche Service Enabler aufrufen kann, die auf den Dialogzustand ansprechbar sind.

24. Medium nach Anspruch 22, wobei jeder Service Enabler von einem Token identifiziert wird, der geändert werden kann, ohne Softwareupgrades zu benötigen.

25. Medium nach Anspruch 22, wobei die Steuerdaten ausgewählt werden aus der Gruppe bestehend aus:
einem Signalisierungsnachricht-Rückgabewert oder -Rückgabeparameterwert;
bereitgestellten Daten;
dynamischen Daten;
Daten, die aus einer externen Anwendung erhalten werden; und
Daten, die aus einem zugehörigen Betriebssystem erhalten werden.

26. Medium nach Anspruch 22, wobei die Service Enabler ausgewählt werden aus der Gruppe bestehend aus:
einem Benutzeridentitäts-Service Enabler;
dem Registrierungs-Service Enabler;
einem Träger-Interaktions-Service Enabler;
einem Datenschutz-Service Enabler;
einem Anfrageauthorisierungs-Service Enabler;
einem Benutzerdaten-Ablage Service Enabler;
einem Anwesenheits-Service Enabler;
einem Standort-Service Enabler;
einem Benutzersicherheits-Service Enabler;
einem SIP Infrastruktur-Sicherheits-Service Enabler;
einem Dienstfähigkeits-Interaktionsmanager Service Enabler;
einem SIP Kompressions-Service Enabler;
einem NAT und Firewall-Transversal-Service Enabler;
einem Anfragerouting-Service Enabler;
einem Voice-over-IP Service Peering Enabler; und
einem Buchhaltungs-Service Enabler.
